(19)

Europäisches
Patentamt
European
Patent Office
Office européen
des brevets

(11) **EP 4 518 232 A1**

(12) **EUROPEAN PATENT APPLICATION**
published in accordance with Art. 153(4) EPC

(43) Date of publication:
**05.03.2025   Bulletin 2025/10**

(21) Application number: **23830257.4**

(22) Date of filing: **27.06.2023**

(51) International Patent Classification (IPC):
***H04L 5/00*** *(2006.01)*

(52) Cooperative Patent Classification (CPC):
**H04L 5/00**

(86) International application number:
**PCT/CN2023/102814**

(87) International publication number:
**WO 2024/002080 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.06.2022   CN 202210734430
04.08.2022   CN 202210932646
20.06.2023   CN 202310742777**

(71) Applicant: **Huawei Technologies Co., Ltd.
Shenzhen, Guangdong 518129 (CN)**

(72) Inventors:
• **RUAN, Wei
Shenzhen, Guangdong 518129 (CN)**
• **WANG, Minjuan
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **DATA TRANSMISSION METHOD AND COMMUNICATION APPARATUS**

(57)    A data transmission method and a communication apparatus are provided. In the method, a plurality of MPDUs in a PPDU are transmitted through N sub-channels in a tile-based allocation manner, and each tile is independently encoded and decoded. In this way, for interference that randomly arrives in a frequency band, regardless of continuous interference or instantaneous interference, MPDUs in a frequency band with interference and in a frequency band without interference are independent of each other. This does not affect data receiving in the frequency band without interference, does not cause a spectrum resource waste, and can improve spectral efficiency and a transmission rate in an interference scenario.

```
Transmitter device                          Receiver device

510: Generate a PPDU, where the
PPDU includes a PSDU, the PSDU
includes N tiles, the N tiles one-to-one
correspond to N sub-channels, each sub-
channel is used to carry a corresponding
tile, each tile includes at least one
MPDU, and each tile is independently
encoded

        520: Send the PPDU through the N
        sub-channels

                          530: Parse the PPDU
```

FIG. 5

**Description**

This application claims priorities to Chinese Patent Application No. 202210734430.0, filed with the China National Intellectual Property Administration on June 27, 2022 and entitled "PHYSICAL LAYER SERVICE DATA UNIT SENDING METHOD AND COMMUNICATION APPARATUS", to Chinese Patent Application No. 202210932646.8, filed with the China National Intellectual Property Administration on August 4, 2022 and entitled "DATA TRANSMISSION METHOD AND COMMUNICATION APPARATUS", and to Chinese Patent Application No. 202310742777.4, filed with the China National Intellectual Property Administration on June 20, 2023 and entitled "DATA TRANSMISSION METHOD AND COMMUNICATION APPARATUS", all of which are incorporated herein by reference in their entireties.

**TECHNICAL FIELD**

This application relates to the wireless communication field, and more specifically, to a data transmission method and a communication apparatus.

**BACKGROUND**

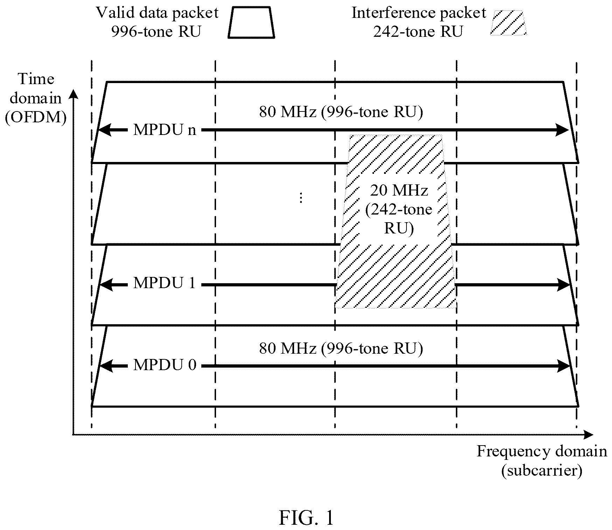

Currently, wireless fidelity (wireless fidelity, Wi-Fi) is a most widely used wireless network transmission technology, and is applied to almost all intelligent devices (for example, a mobile phone, a computer, a watch, a headset, a tablet computer, and a game console). Promotion of Wi-Fi brings much convenience to life, but also complicates a network environment. There are various types of interference between devices, including co-channel interference, overlapping-channel interference, and adjacent-channel interference. As a bandwidth increases, signals are more sensitive to interference, especially overlapping-channel interference. Currently, a conventional physical layer service data unit (physical layer service data unit, PSDU) subcarrier mapping manner is used. As shown in FIG. 1, a signal (namely, a valid data packet) covers an entire valid frequency band and an orthogonal frequency division multiplexing (orthogonal frequency division multiplexing, OFDM) symbol for transmission. A bandwidth of the valid frequency band is 80 MHz and includes 996 resource units (resource unit, RU). When a part of the bandwidth is occupied by an interference signal (namely, an interference packet), the part of the bandwidth is 20 MHz and includes 242 RUs. The local interference affects decoding of most medium access control protocol data units (medium access control protocol data unit, MPDU). Especially in high-order modulation, a decoding failure probability is higher. Consequently, it is usually difficult to achieve ideal transmission effect in a large bandwidth.

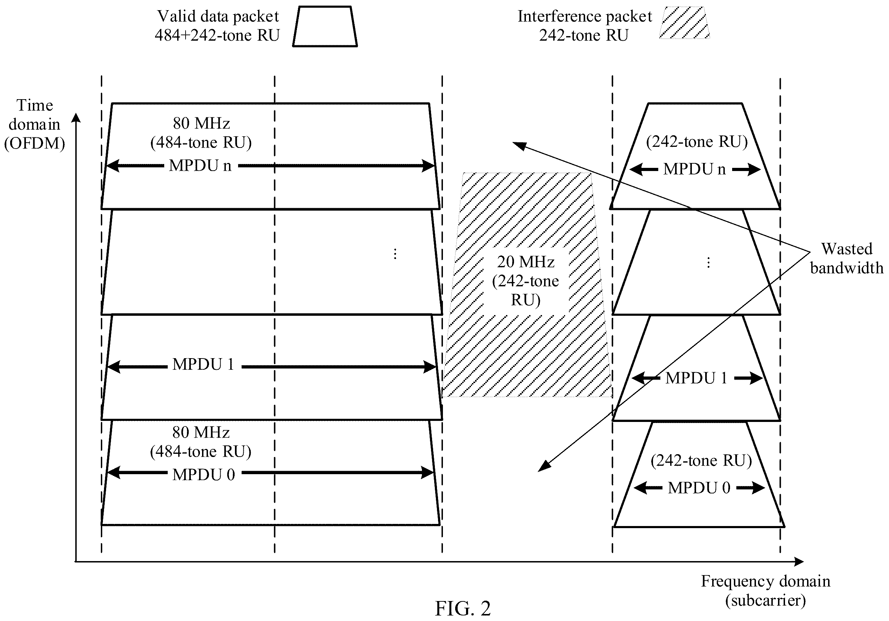

Therefore, in Wi-Fi 7, a multiple resource unit (multiple resource unit, MRU) technology is proposed. FIG. 2 shows a PSDU subcarrier mapping manner in an MRU. In the mapping manner, a 20 MHz bandwidth occupied by an interference packet may be skipped, and data is sent only on a bandwidth without interference or with small interference. This technology is usually used in combination with a preamble puncturing (preamble puncturing) function, indicating that 20 MHz bandwidths with interference are removed from a data part and a corresponding preamble part is removed. This can greatly improve transmission performance in an interference scenario.

In an interference scenario with a high duty cycle, the PSDU subcarrier mapping manner in the MRU can effectively improve overall performance. However, a spectrum resource waste may still exist. In addition, most interference scenarios actually have moderate or lower duty cycles. Consequently, when the foregoing solution is used, spectra in an entire bandwidth cannot be properly utilized. Especially for burst and temporary hidden interference, it is difficult to identify a location of the interference in real time, and the interference cannot be properly avoided by using the preamble puncturing technology, resulting in a great decrease in a system throughput.

**SUMMARY**

This application provides a data transmission method, to improve spectral efficiency and a transmission rate in an interference scenario.

According to a first aspect, a data transmission method is provided, and is performed in a system in which a channel is segmented into N sub-channels. The method may be performed by a transmitter device, or a chip or a circuit disposed in a transmitter device. This is not limited in this application.

The method may include: generating a physical layer protocol data unit PPDU, where the PPDU includes a physical layer service data unit PSDU, the PSDU includes N tiles, the N tiles one-to-one correspond to the N sub-channels, each sub-channel is used to carry a corresponding tile, and each tile includes at least one medium access control protocol data unit MPDU in the PPDU, where $N \geq 2$ and N is an integer; and sending the PPDU through the N sub-channels.

It should be understood that a channel actually allocated for communication between the transmitter device and a receiver device may be segmented into M sub-channels. However, because some sub-channels have large interference, the transmitter device does not schedule these sub-channels, and sends the PPDU only through the remaining N sub-channels, where M≥N≥2. In other words, the method is performed in a system in which a channel #1 is segmented into N sub-channels. The channel #1 herein may be understood.

It should be understood that a channel actually allocated for communication between the transmitter device and a receiver device may be segmented into M sub-channels. However, because some sub-channels have large interference, the transmitter device does not schedule these sub-channels, and sends the PPDU only through the remaining N sub-channels, where M≥N≥2. In other words, the method is performed in a system in which a channel #1 is segmented into N sub-channels. The channel #1 herein may be understood as a channel (including a sub-channel on which interference may exist) actually allocated for communication between the transmitter device and the receiver device. Alternatively, the channel #1 may be understood as a remaining channel obtained by removing a sub-channel with large interference from a channel actually allocated for communication between the transmitter device and the receiver device.

In the foregoing technical solutions, a plurality of MPDUs in the PPDU are transmitted through the N sub-channels in a tile-based allocation manner. In this way, for interference that randomly arrives in a frequency band, regardless of continuous interference or instantaneous interference, MPDUs in a frequency band with interference and MPDUs in a frequency band without interference are independent of each other. This does not affect data receiving in the frequency band without interference, does not cause a spectrum resource waste, and can improve spectral efficiency and a transmission rate in an interference scenario.

In some implementations of the first aspect, when a part of a first MPDU in L MPDUs is allocated to a first tile in the N tiles based on a proportion, and a remaining part of the first MPDU is allocated to a second tile in the N tiles, the first MPDU belongs to the first tile, a first quantity of symbols required for a non-cross-tile MPDU that is allocated to the first tile is less than a second quantity of symbols required for a non-cross-tile MPDU that is allocated to the second tile, the first quantity of symbols is a ratio of a quantity of bits carried in the non-cross-tile MPDU that is allocated to the first tile to a quantity of valid data bits carried in a symbol corresponding to the first sub-channel, and the second quantity of symbols is a ratio of a quantity of bits carried in the non-cross-tile MPDU that is allocated to the second tile to a quantity of valid data bits carried in a symbol corresponding to the second sub-channel; or when all of a first MPDU in L MPDUs is allocated to a first tile in the N tiles based on a proportion, the first MPDU belongs to the first tile.

In the foregoing technical solutions, a cross-tile MPDU allocation manner is provided. The allocation manner is easy to implement, and can save symbol resources in a communication system.

In some implementations of the first aspect, the method further includes: generating a second MPDU; and when a length of the second MPDU is greater than or equal to a first threshold, segmenting the second MPDU into a plurality of MPDUs that meet a requirement of the first threshold, where the plurality of MPDUs are included in the L MPDUs, and the first threshold is an MPDU segmenting threshold.

It should be understood that the second MPDU herein is an MPDU generated by the transmitter device at a MAC layer. When the length of the second MPDU is greater than or equal to the first threshold, the MPDU may be segmented at the MAC layer into the plurality of MPDUs that meet the requirement of the first threshold. Then, the plurality of MPDUs (namely, the L MPDUs) that meet the requirement of the first threshold are sent at the MAC layer to a physical layer for subsequent tile-based allocation.

It may be understood that, when the MPDU is excessively long, a tile to which the MPDU is allocated may occupy more symbols than a tile to which the MPDU is not allocated. Consequently, when the tile to which the MPDU is not allocated is used for transmission, resources are wasted. In the foregoing technical solutions, the length of the MPDU may be controlled, to avoid generating an excessively long MPDU. This reduces a resource waste.

According to a second aspect, a data transmission method is provided, and is performed in a system in which a channel is segmented into N sub-channels. The method may be performed by a receiver device, or a chip or a circuit disposed in a receiver device. This is not limited in this application.

The method may include: receiving a physical layer protocol data unit PPDU through the N sub-channels, where the PPDU includes a physical layer service data unit PSDU, the PSDU includes N tiles, the N tiles one-to-one correspond to the N sub-channels, N≥2, each sub-channel is used to carry a corresponding tile, and each tile includes at least one medium access control protocol data unit MPDU in the PPDU, where N≥2 and N is an integer; and parsing the PPDU.

For beneficial effect of the second aspect, refer to the descriptions in the first aspect. Details are not described herein again.

In some implementations of the first aspect or the second aspect, the MPDU included in each of the N tiles is obtained by allocating, based on a proportion of a quantity of valid data bits carried in one symbol corresponding to each of the N sub-channels, L MPDUs included in an aggregate medium access control protocol data unit A-MPDU in the PPDU, where L≥N and L is an integer.

In some implementations of the first aspect or the second aspect, N is a sum of a quantity of multiple resource unit MRU-type bandwidths and a quantity of non-MRU-type bandwidths of the channel, or N is a quantity of equally segmented bandwidths of the channel.

It should be understood that the N sub-channels obtained through segmenting one-to-one correspond to the N bandwidths obtained through segmenting.

For example, N is the quantity of equally segmented bandwidths of channel. It may be understood that N is a quantity of sub-channels obtained by equally segmenting the channel based on a width of a first bandwidth.

During channel segmenting based on the foregoing technical solutions, based on importance of a service and a service volume, important service data may be allocated to a tile without interference and with a large quantity of valid data bits, or repeatedly sent to evenly allocated tiles, to improve decoding accuracy.

In some implementations of the first aspect or the second aspect, the PPDU further includes one or more repeated service fields.

In some implementations of the first aspect or the second aspect, each tile includes the service field.

In the foregoing technical solutions, one service field is mapped to each of the N tiles, to improve a decoding probability of a scrambling seed.

In some implementations of the first aspect or the second aspect, a third tile in the N tiles includes the service field, and the third tile is one of the N tiles.

In some implementations of the first aspect or the second aspect, a primary channel of the channel is included in a sub-channel that carries the third tile.

In the foregoing technical solutions, the service field is mapped to the tile corresponding to the sub-channel that is in the N sub-channels and that includes the primary channel, to reduce a possibility of being interfered with.

In some implementations of the first aspect or the second aspect, when N is the quantity of equally segmented bandwidths of the channel, the third tile is a tile that includes the service field and that is generated by equally segmenting the service field and the L MPDUs as a whole into N parts.

In some implementations of the first aspect or the second aspect, N=4.

In some implementations of the first aspect or the second aspect, the PPDU includes a signaling SIG field, the SIG field includes a first subfield and a second subfield, the first subfield indicates a tile-based allocation manner of the PSDU, and the second subfield indicates a mapping manner of the service field in the N tiles.

In some implementations of the first aspect or the second aspect, the SIG field further includes a third subfield, and the third subfield indicates a modulation order used by the N tiles.

In some implementations of the first aspect or the second aspect, the SIG field further includes a fourth subfield, and the fourth subfield indicates a quantity of spatial streams used by the N tiles.

According to a third aspect, a communication apparatus is provided, including modules or units configured to perform the method in either the first aspect or the second aspect and any possible implementation of the first aspect or the second aspect.

According to a fourth aspect, this application provides a communication device, including at least one processor. The at least one processor is coupled to at least one storage, the at least one storage is configured to store a computer program or instructions, and the at least one processor is configured to invoke the computer program or the instructions from the at least one storage, and run the computer program or the instructions, to enable the communication device to perform the method in either the first aspect or the second aspect and any possible implementation of the first aspect or the second aspect.

According to a fifth aspect, this application provides a communication device, including a processor, a storage, and a transceiver. The storage is configured to store a computer program. The processor is configured to invoke and run the computer program stored in the storage, and control the transceiver to receive and send a signal, to enable the communication device to perform the method in either the first aspect or the second aspect and any possible implementation of the first aspect or the second aspect.

According to a sixth aspect, this application provides a communication apparatus, including a processor and a communication interface. The communication interface is configured to receive a signal, and transmit the received signal to the processor, and the processor processes the signal, to enable the communication apparatus to perform the method in either the first aspect or the second aspect and any possible implementation of the first aspect or the second aspect.

Optionally, the communication interface may be an interface circuit, an input/output interface, or the like. The processor may be a processing circuit, a logic circuit, or the like.

Optionally, the communication apparatus in the sixth aspect may be a chip or an integrated circuit.

According to a seventh aspect, this application provides a computer-readable storage medium. The computer-readable storage medium stores computer instructions, and when the computer instructions are run on a computer, the method in either the first aspect or the second aspect and any possible implementation of the first aspect or the second aspect is performed.

According to an eighth aspect, this application provides a computer program product. The computer program product includes computer program code, and when the computer program code is run on a computer, the method in either the first aspect or the second aspect and any possible implementation of the first aspect or the second aspect is performed.

According to a ninth aspect, a physical layer service data unit sending method is provided. The method may be performed by a sending device, or a chip or a circuit disposed in a sending device. This is not limited in this application.

The method may include: generating a physical layer service data unit PSDU; and sending the PSDU in a first frequency band, where the first frequency band includes a frequency band with interference and a frequency band without interference, and medium access control protocol data units MPDUs in the frequency band with interference and the frequency band without interference are separately transmitted via tiles.

With reference to the ninth aspect, in some implementations of the ninth aspect, the first frequency band is segmented into two tiles based on an extremely high throughput multiple resource unit EHT MRU bandwidth and a remaining non-MRU bandwidth, and lengths of PSDUs of the tiles are allocated in proportion based on respective quantities of valid subcarriers.

With reference to the ninth aspect, in some implementations of the ninth aspect, a service field is preferentially allocated to a tile on which a primary channel is located.

With reference to the ninth aspect, in some implementations of the ninth aspect, an entire bandwidth is evenly segmented into tiles, and lengths of PSDUs of the tiles are allocated based on a same proportion.

With reference to the ninth aspect, in some implementations of the ninth aspect, an average quantity of bits carried in a valid carrier on each of the two tiles is determined, a cross-tile MPDU is allocated to a tile with a larger average quantity of bits carried in a valid carrier, or allocated to a tile with less interference based on an interference proportion.

With reference to the ninth aspect, in some implementations of the ninth aspect, service field is added to each tile.

With reference to the ninth aspect, in some implementations of the ninth aspect, medium access control service data unit MSDU segmenting is performed on an MPDU of a tile with interference, to obtain two or more smaller MPDUs.

With reference to the ninth aspect, in some implementations of the ninth aspect, different data is placed on tiles based on importance of an upper-layer data service and interference frequency of the tile. Based on a quality of service (quality of service, QoS) level of the upper-layer data service, a PSDU with a high level is repeatedly mapped to each tile, to improve decoding accuracy of service data.

According to a tenth aspect, this application provides a communication apparatus. The communication apparatus has functions of implementing the method in the ninth aspect or any possible implementation of the ninth aspect. The functions may be implemented by hardware, or may be implemented by hardware executing corresponding software. The hardware or the software includes one or more units corresponding to the foregoing functions, for example, a processing unit, a receiving unit, or a sending unit.

According to an eleventh aspect, this application provides a communication device, including at least one processor. The at least one processor is coupled to at least one storage, the at least one storage is configured to store a computer program or instructions, and the at least one processor is configured to invoke the computer program or the instructions from the at least one storage and run the computer program or the instructions, to enable the communication device to perform the method in the ninth aspect or any possible implementation of the ninth aspect.

According to a twelfth aspect, this application provides a communication device, including a processor, a storage, and a transceiver. The storage is configured to store a computer program. The processor is configured to invoke and run the computer program stored in the storage, and control the transceiver to receive and send a signal, to enable the communication device to perform the method in the ninth aspect or any possible implementation of the ninth aspect.

According to a thirteenth aspect, this application provides a communication apparatus, including a processor and a communication interface. The communication interface is configured to receive a signal, and transmit the received signal to the processor, and the processor processes the signal, to enable the communication apparatus to perform the method in the ninth aspect or any possible implementation of the ninth aspect.

Optionally, the communication interface may be an interface circuit, an input/output interface, or the like. The processor may be a processing circuit, a logic circuit, or the like.

Optionally, the communication apparatus in the thirteenth aspect may be a chip or an integrated circuit.

According to a fourteenth aspect, this application provides a computer-readable storage medium. The computer-readable storage medium stores computer instructions. When the computer instructions are run on a computer, the method in the ninth aspect or any possible implementation of the ninth aspect is performed.

According to a fifteenth aspect, this application provides a computer program product. The computer program product includes computer program code, and when the computer program code is run on a computer, the method in the ninth aspect or any possible implementation of the ninth aspect is performed.

## BRIEF DESCRIPTION OF DRAWINGS

FIG. 1 is a diagram of a conventional PSDU subcarrier mapping manner;
FIG. 2 is a diagram of a PSDU subcarrier mapping manner in an MRU;
FIG. 3 is a diagram of a network architecture of a wireless local area network applicable to an embodiment of this application;
FIG. 4 is a diagram of an example of a preamble puncturing technology;

FIG. 5 is a block diagram of a data transmission method according to an embodiment of this application;

FIG. 6 is a diagram of pre-allocating L MPDUs according to this application;

FIG. 7 is a block diagram of a possible processing procedure in which a transmitter device generates a PPDU according to this application;

FIG. 8 is a diagram of a PSDU subcarrier mapping method according to this application;

FIG. 9 is a diagram of another PSDU subcarrier mapping method according to this application;

FIG. 10 is a diagram of mapping performed in the PSDU subcarrier mapping method shown in FIG. 8 in a scenario shown in FIG. 1;

FIG. 11 is a diagram of a possible frame structure of a PPDU according to this application;

FIG. 12 is a block diagram of a communication apparatus 200 according to this application;

FIG. 13 is a diagram of a structure of a communication apparatus 300 according to this application;

FIG. 14 is a diagram of a structure of a communication apparatus 400 according to this application;

FIG. 15 is a block diagram of a method for sending and receiving a physical layer service data unit according to an embodiment of this application;

FIG. 16 is a block diagram of a communication apparatus 1000 according to this application;

FIG. 17 is a diagram of a structure of a communication apparatus 10 according to this application;

FIG. 18 is a block diagram of a data transmission method according to an embodiment of this application; and

FIG. 19 shows a possible PSDU subcarrier mapping method according to an embodiment of this application.

## DESCRIPTION OF EMBODIMENTS

The following describes technical solutions in embodiments of this application with reference to accompanying drawings.

Embodiments of this application may be applied to a wireless local area network (wireless local area network, WLAN). Currently, a standard used for the WLAN is the Institute of Electrical and Electronics Engineers (Institute of Electrical and Electronics Engineers, IEEE) 802.11 series. The WLAN may include a plurality of basic service sets (basic service set, BSS). Network nodes in the BSS are a station (station, STA) and an access point (access point, AP). Each BSS may include one AP and a plurality of STAs associated with the AP.

The AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports a plurality of WLAN standards such as 802.11a/b/g, 802.11n, 802.11ac, 802.11ax, and 802.11be or a later version that is currently being discussed.

The access point in this application may be a high efficiency (high efficiency, HE) STA, an extremely high throughput (extremely high throughput, EHT) STA, or a STA applicable to a future-generation Wi-Fi standard.

For example, the access point and the station may be devices used in the Internet of vehicles, Internet of things nodes or sensors in the Internet of things (Internet of things, IoT), smart cameras, smart remote controls, and smart water meters in a smart home, and sensors in a smart city.

The STA in embodiments of this application may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, and a computer supporting a Wi-Fi communication function. Optionally, the STA may support an 802.11ax standard. Further, optionally, the STA supports a plurality of WLAN standards such as 802.11ac, 802.11n, 802.11g, 802.11b, and 802.11a or a subsequent version.

In embodiments of this application, the STA or the AP includes a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that the execution body can run a program that records code of the method provided in embodiments of this application to perform communication according to the method provided in embodiments of this application. For example, the execution body of the method provided in embodiments of this application may be a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include and/or carry instructions and/or data.

Alternatively, embodiments of this application are applicable to a wireless local area network system, for example, an Internet of things (Internet of things, IoT) network or a vehicle-to-everything (Vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for description, and the communication systems applicable to this application are not limited thereto. This is uniformly described herein, and details are not described below again.

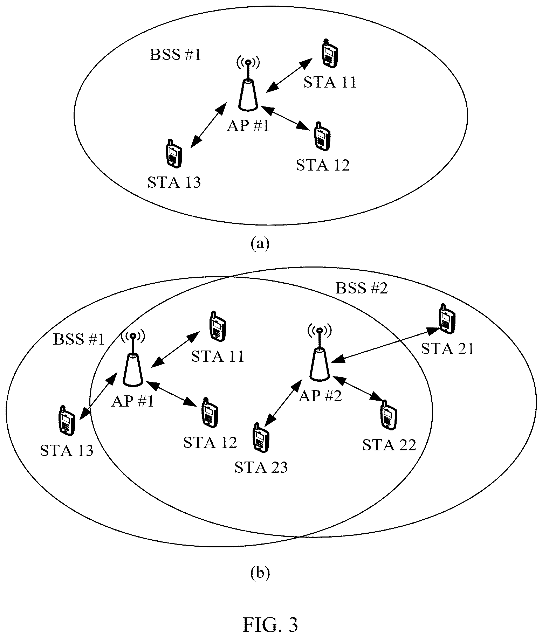

FIG. 3 is a diagram of a network architecture of a wireless local area network to which an embodiment of this application is applicable. As shown in (a) in FIG. 3, one BSS may include one AP and one or more STAs associated with the AP. The network architecture of the wireless local area network may further include a plurality of BSSs. For example, (b) in FIG. 3 shows two BSSs, and the two BSSs partially overlap, namely, an OBSS. A BSS #1 includes an AP #1, a STA 11, a STA 12, and a STA 13, and a BSS #2 includes an AP #2, a STA 21, a STA 22, and a STA 23. The STA 11, the STA 12, the STA 22, and the STA 23 are mutually overlapping parts of the two BSSs. Each BSS includes one AP and a plurality of STAs. In one BSS, data may be transmitted between an AP and each STA, and data may be transmitted between a plurality of STAs. The AP #1 may also communicate with the AP #2, and STAs included in the two BSSs may also communicate with each other.

It should be understood that FIG. 3 is merely an example and should not constitute a limitation on the network architecture of the wireless local area network to which this application is applicable. For example, the network architecture may alternatively include more BSSs, each BSS may alternatively include more STAs, or some BSSs may alternatively not include an AP. An area in which a plurality of BSSs overlap may alternatively include more STAs, or the like. This is not limited herein in embodiments of this application.

For ease of understanding embodiments of this application, the following first describes several nouns or terms in this application.

1. Symbol (symbol): The symbol is an abbreviation of a time domain symbol, and may also be referred to as an orthogonal frequency division multiplexing (orthogonal frequency division multiplexing, OFDM) symbol.

2. Subcarrier: Wireless communication signals are transmitted in specific channel bandwidths. A bandwidth may be segmented, by using an OFDM technology, into a plurality of frequency components within a channel bandwidth at a specific frequency spacing. These components are referred to as subcarriers.

3. Resource unit (resource unit, RU): The resource unit is a minimum time-frequency unit in the WLAN. Seven types of contiguous RUs are defined in the standard: a 26-tone RU, a 52-tone RU, a 106-tone RU, a 242-tone RU, a 484-tone RU, a 996-tone RU, and a 2*996-tone RU. The 26-tone RU indicates that the type of RU includes 26 subcarriers, the 52-tone RU indicates that the type of RU includes 52 subcarriers, and the rest may be deduced by analogy. Currently, a spacing of subcarriers in a WLAN system is 78.125 kHz, and there are about 12.8 subcarriers in a 1 MHz bandwidth. Therefore, the 26-tone RU corresponds to about 2 MHz, the 52-tone RU corresponds to about 4 MHz, the 106-tone RU corresponds to about 8 MHz, and the 242-tone RU corresponds to about 20 MHz. For example, when a bandwidth is 80 MHz, the entire bandwidth may include an entire 996-tone RU, four 242-tone RUs, or any combination of a 26-tone RU, a 52-tone RU, a 106-tone RU, a 242-tone RU, and a 484-tone RU. When a bandwidth is 160 MHz or 80+80 MHz, the entire bandwidth may be considered as replication of two subcarrier plans of 80 MHz, and may include an entire 2*996-tone RU or any one of or a combination of at least two of a 26-tone RU, a 52-tone RU, a 106-tone RU, a 242-tone RU, 484-tone RU, and a 996-tone RU.

4. Multi-RU (multi-RU, MRU): The multi-RU is an RU combination including two or more RUs. These MRUs may be contiguous or non-contiguous. For example, the MRU may be a 484+242-tone RU in an 80 MHz bandwidth, a 996+484-tone RU and a 996+484+242-tone RU in a 160 MHz bandwidth, a 2*996+484-tone RU, a 3*996-tone RU, and a 3*996+484-tone RU in a 320 MHz bandwidth, and the like.

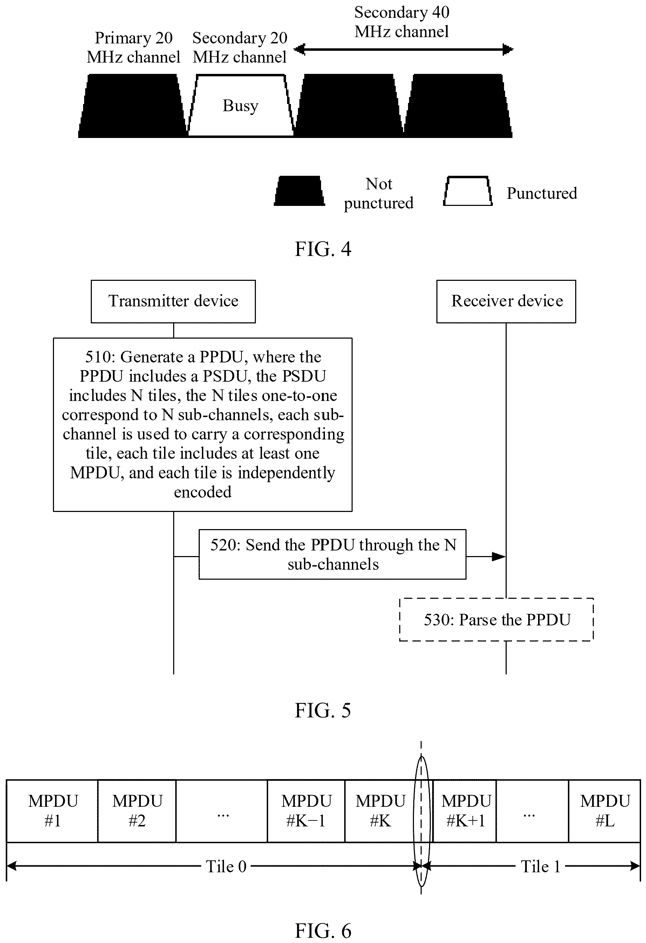

5. Preamble puncturing technology: In the Wi-Fi 6 protocol, a new multi-bandwidth access manner, namely, the preamble puncturing technology is defined. This technology is based on the OFDMA transmission technology, and can effectively optimize multi-channel bonding access. During preamble puncturing, the STA is allowed to delete a 20 MHz channel from an 80 MHz or 160 MHz channel during transmission, that is, a middle part of the channel is deleted. This is similar to a puncturing (puncturing) operation. An example of the preamble puncturing technology is shown in FIG. 4.

6. Medium access control service data unit (MAC service data unit): The medium access control service data unit is a service data unit at a MAC layer, and includes original to-be-sent data information.

7. Medium access control protocol data unit (MAC protocol data unit): The medium access control protocol data unit is a protocol data unit at a medium access control (medium access control, MAC) MAC layer, and includes information about to-be-sent data after an MSDU is packaged based on a specific frame structure.

8. PSDU: The PSDU is a physical layer service data unit, and may be considered as MPDU information transmitted from the MAC layer.

9. Physical layer protocol data unit (physical layer protocol data unit, PPDU): The physical layer protocol data unit is a data packet obtained by encapsulating a PSDU based on a specific frame format, and the data packet is also final data encapsulation that is to be sent through a physical medium.

In this application, unless otherwise specified, for same or similar parts of embodiments, refer to each other. In embodiments of this application and implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship thereof. The following implementations of this application are not intended to limit the protection scope of this application.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, the apparatus provided in embodiments of this application may also correspondingly implement these features or functions. Details are not described herein.

The technical solutions provided in this application are described in detail below with reference to the accompanying drawings.

FIG. 5 is a block diagram of a data transmission method according to an embodiment of this application. The method may be applied to the scenario in FIG. 3, or another communication scenario in which an OBSS exists. This is not limited in embodiments of this application. For example, in FIG. 5, a transmitter device may be an AP, and a receiver device may be a STA. The method includes the following steps.

The method is performed in a system including a channel #1, and the channel #1 may be segmented into N sub-channels, where N≥2. The channel #1 herein may be understood as a channel (including a bandwidth on which interference may exist) actually allocated for communication between the transmitter device and the receiver device. Alternatively, the channel #1 may be understood as a remaining channel obtained by removing a sub-channel with large interference from a channel actually allocated for communication between the transmitter device and the receiver device.

S510: The transmitter device generates a PPDU, where the PPDU includes a PSDU, the PSDU includes N tiles, the N tiles one-to-one correspond to the N sub-channels, each sub-channel is used to carry a corresponding tile, and each of the N tiles includes at least one MPDU.

An aggregate medium access control protocol data unit (aggregate MAC protocol data unit, A-MPDU) in the PPDU includes L MPDUs, the L MPDUs are included in the N tiles, and each tile includes at least one of the L MPDUs, where L≥N≥2, and N and L are integers.

Optionally, a quantity of MPDUs included in each of the N tiles is obtained by allocating, based on a proportion of a quantity of valid data bits carried in one symbol corresponding to each of the N sub-channels, the L MPDUs included in the A-MPDU in the PPDU.

It may be understood that the L MPDUs in this application are the A-MPDU (namely, a plurality of MPDUs) received, from a MAC layer, by the transmitter device at a physical layer.

Optionally, when a length of an MPDU generated at the MAC layer is greater than or equal to a first threshold, the MPDU may be segmented, at the MAC layer, into a plurality of MPDUs that meet a requirement of the first threshold, and the plurality of MPDUs are sent to the physical layer for processing, where the first threshold is an MPDU segmenting threshold that is preset or defined in a protocol.

It may be further understood that, in this application, a manner in which the PSDU is segmented into the N tiles that one-to-one correspond (or are one-to-one mapped) to the N sub-channels may also be referred to as a subcarrier mapping manner of the PSDU. The two descriptions in this application may be replaced with each other. This is not limited.

In an implementation, generating the to-be-sent PPDU at the physical layer in step S410 may be implemented by using the following steps:

(1) Determine a value of N.

For example, N may be a sum of a quantity of extremely high throughput (extremely high throughput, EHT) MRU-type bandwidths and a quantity of non-MRU-type bandwidths that are included in the channel #1. For example, when the quantity of MRU-type bandwidths is 2, and the quantity of MRU-type bandwidths is 3, N=5. The channel #1 is segmented into five sub-channels that one-to-one correspond to five bandwidths.

For example, N may be an integer greater than or equal to 2, and the N sub-channels one-to-one correspond to N bandwidths obtained by equally segmenting a bandwidth of the channel #1 into N parts. For example, N=4.

(2) Pre-allocate the L MPDUs to the N tiles.

Specifically, the L MPDUs may be pre-allocated to the N tiles based on the proportion of the quantity of valid data bits that can be carried on one symbol of each of the sub-channels corresponding to each of the N tiles. The quantity of valid data bits $N_{DBPS,tl}$ that can be carried on one symbol of a sub-channel corresponding to one tile may be determined according to the following formula:

$$N_{DBPS,tl} = N_{CBPS,tl} \cdot R_{tl} = N_{sd,tl} \cdot N_{BPSCS,tl} \cdot R_{tl} \cdot N_{ss,tl}$$

$N_{sd,tl}$ is the quantity of valid data subcarriers in one symbol of a sub-channel corresponding to one tile, $N_{BPSCS,tl}$ is a quantity of bits carried in one valid data subcarrier, $R_{tl}$ is a coding rate, and $N_{ss,tl}$ indicates a quantity of spatial streams of each tile.

FIG. 6 is a diagram of pre-allocating L MPDUs according to this application. For example, as shown in FIG. 6, N=2, that is, the channel is segmented into two sub-channels. The L MPDUs need to be allocated to two tiles, and the two tiles are denoted as a tile 0 (tile 0) and a tile 1 (tile 1). Then, a length occupied by the L MPDUs may be pre-allocated based on a proportion (namely, $N_{DBPS}(tile0) : N_{DBPS}(tile1)$) of a quantity $N_{DBPS}(tile0)$ of valid data bits that can be carried on one symbol of a sub-channel corresponding to the tile 0 to a quantity $N_{DBPS}(tile1)$ of valid data bits that can be carried on one symbol of a sub-channel corresponding to the tile 1.

Optionally, in a pre-allocating process, allocation may be performed based on importance of data included in the L MPDUs. For example, an MPDU including basic information, key information, and information with a high real-time requirement is placed on a tile corresponding to a sub-channel with smaller interference, and an MPDU corresponding to other information may be placed on a tile corresponding to a sub-channel with higher interference frequency. This can improve system reliability and reduce a retransmission rate. Based on a quality of service (quality of service, QoS) level of an upper-layer data service, a PSDU with a high level is repeatedly mapped to each tile, to improve decoding accuracy of service data.

(3) Determine a final allocation result based on a pre-allocating result of the L MPDUs.

It should be understood that, in the process of pre-allocating the L MPDUs, some MPDUs may be completely allocated to one tile. For example, in FIG. 6, an MPDU #1 to an MPDU #K-1 are completely allocated to the tile 0, and an MPDU #K+1 to an MPDU #L are completely allocated to the tile 1. In this application, these MPDUs may be referred to as non-cross-tile MPDUs. For some MPDUs, a part of the MPDU may be allocated to one tile, and another part may be pre-allocated to another tile. For example, in FIG. 6, a part of an MPDU #K is allocated to the tile 0, and the remaining part of the MPDU #K is allocated to the tile 1. In this application, these MPDUs may be referred to as cross-tile (cross-tile) MPDUs.

In this case, the non-cross-tile MPDU is finally allocated to the pre-allocated tile, and the cross-tile MPDU #K is allocated to either of the two pre-allocated tiles, or is allocated, based on a preset condition, to one of the two pre-allocated tiles that meets the condition. For ease of understanding, the cross-tile MPDU #K in FIG. 6 is used as an example to provide two possible preset conditions for implementing cross-tile MPDU allocation.

For example, a preset condition 1 is used. Which tile the MPDU #K is finally allocated to is determined based on the following preset condition 1:

$$\frac{8 \times \sum_{i=1}^{K-1} MDPU\_LENGTH_i}{N_{DBPS}(tile0)} < \frac{8 \times \sum_{i=K+1}^{L} MDPU\_LENGTH_i}{N_{DBPS}(tile1)} ? tile0 : tile1$$

*MDPU_LENGTH*ᵢ is a length of an MPDU i, a unit length occupies 1 byte, $8 \times \sum_{i=1}^{K-1} MDPU\_LENGTH_i$ is a quantity of bits carried in a non-cross-tile MPDU pre-allocated to the tile 0, and $8 \times \sum_{i=K+1}^{L} MDPU\_LENGTH_i$ is a quantity of bits carried in a non-cross-tile MPDU pre-allocated to the tile 1. $\frac{8 \times \sum_{i=1}^{K-1} MDPU\_LENGTH_i}{N_{DBPS}(tile0)}$ indicates a quantity of symbols required for transmitting, through the sub-channel corresponding to the tile 0, the non-cross-tile MPDU pre-allocated to the tile 0, and $\frac{8 \times \sum_{i=K+1}^{L} MDPU\_LENGTH_i}{N_{DBPS}(tile1)}$ indicates a quantity of symbols required for transmitting, through the sub-channel corresponding to the tile 1, the non-cross-tile MPDU pre-allocated to the tile 1. In other words, the foregoing formula indicates that the cross-tile MPDU K is allocated to a tile that requires fewer symbols.

For example, a preset condition 2 is used. Which tile the MPDU #K is finally allocated to is determined based on the following preset condition 2:

$$\frac{A_{tot-bit}}{N_{DBPS}(tile0)} > \frac{B_{tot-bit}}{N_{DBPS}(tile1)} ? tile0 : tile1$$

$A_{tot-bit}$ is a quantity of bits carried in a part A that is of the cross-tile MPDU K and that is pre-allocated to the tile 0, and $B_{tot-bit}$ is a quantity of bits carried in a part B that is of the cross-tile MPDU K and that is pre-allocated to the tile 1. $\frac{A_{tot-bit}}{N_{DBPS}(tile0)}$ indicates a quantity of symbols required for transmitting the part A of the MPDU through the sub-channel corresponding to the tile 0, and $\frac{B_{tot-bit}}{N_{DBPS}(tile1)}$ indicates a quantity of symbols required for transmitting the part B of the MPDU through the sub-channel corresponding to the tile 1. In other words, the foregoing formula indicates that the cross-tile MPDU K is allocated to a tile that requires more symbols.

(4) Map a service field to the tile.

It should be understood that the PPDU generated by the transmitter device at the physical layer further includes one or more repeated service (SERVICE) fields. The service field is a field added by the transmitter device at the physical layer.

It should be understood that, in this application, the "field" may also be referred to as a domain or a part. Descriptions of same or similar cases are omitted in the following.

For example, the PPDU includes one service field, and the service field may be allocated to any one of the N tiles.

For example, the PPDU includes one service field, and the service field may be allocated to a tile corresponding to a sub-channel that is in the N sub-channels and that includes a primary channel, to reduce a possibility of being interfered with. It should be understood that the primary channel herein is a primary channel of the channel #1.

For example, the PPDU includes N same service fields, and the N tiles each include one service field, to improve a decoding probability of a scrambling seed.

(5) Determine a quantity of pre-FEC padded bits of each tile. This step includes step (a) to step (j).

(a) Calculate a quantity $N_{sym,init,tl}$ of initial symbols and an a factor $a_{init,tl}$ of each tile. A calculation process is as follows:

$$N_{sym,init,tl} = \left\lceil \frac{8 \times PSDU\_LENGTH_{tl} + N_{service}}{N_{DBPS,tl}} \right\rceil, N_{service} = \begin{cases} 16, & \text{tile that includes a service field} \\ 0, & \text{tile that does not include a service field} \end{cases}$$

$$N_{Excess,tl} = \mathrm{mod}(8 \times PSDU\_LENGTH_{tl} + N_{service}, N_{DBPS,tl})$$

$PSDU\_LENGTH_{tl}$ is a total length of all MPDUs allocated to corresponding tiles, a unit length occupies 1 byte, and $N_{service}$ is a quantity of valid bits occupied by the service domain.

$$a_{init,tl} = \begin{cases} 4, & \text{if } N_{Excess,tl} = 0 \\ \min\left(\left\lceil \dfrac{N_{Excess,tl}}{N_{DBPS,short,tl}} \right\rceil, 4\right), & \text{otherwise} \end{cases}$$

$N_{DBPS,short,tl} = N_{CBPS,short,tl} \cdot R_{tl} = N_{sd,short,tl} \cdot N_{ss,tf} \cdot N_{BPSCS,tl} \cdot R_{tl}$, where $N_{sd,short,tl}$ may be determined according to Table 36-46 in the P802.11be_D1.3 protocol.

(b) Search for a tile with a largest encoding length from all tiles according to the following formula:

$$\arg\max(f(tl_{\max})) = \arg\max_{tl=0}^{N_{tl}-1}(N_{sym,init,tl} - 1 + \frac{a_{init,tl}}{4})$$

In this application, a found tile with a largest encoding length is denoted as $tl_{\max}$, and $N_{sym,init,tlmax}$ and $a_{init,tlmax}$ corresponding to $tl_{\max}$ are used for all tiles in subsequent steps.

(c) Calculate a quantity of valid data bits and a quantity of encoded bits of a last symbol of each tile based on $a_{init,tlmax}$:

$$N_{DBPS,last,init,tl} = \begin{cases} a_{init,tl_{\max}} \cdot N_{DBPS,short,tl}, & \text{if } a_{init,tl_{\max}} < 4 \\ N_{DBPS,tl}, & \text{if } a_{init,tl_{\max}} = 4 \end{cases}$$

$$N_{CBPS,last,init,tl} = \begin{cases} a_{init,tl_{\max}} \cdot N_{CBPS,short,tl}, & \text{if } a_{init,tl_{\max}} < 4 \\ N_{CBPS,tl}, & \text{if } a_{init,tl_{\max}} = 4 \end{cases}$$

(d) Calculate a total data length $N_{pld,tl}$ and a valid encoding length $N_{avbits,tl}$ of each tile:

$$N_{pld,tl} = (N_{sym,init,tl_{\max}} - 1) \cdot N_{DBPS,tl} + N_{DBPS,last,init,tl}$$

$$N_{avbits,tl} = (N_{sym,init,tl_{\max}} - 1) \cdot N_{CBPS,tl} + N_{CBPS,last,init,tl}$$

(e) Determine, based on a low density parity check code (low density parity check code, LDPC) PPDU encoding process in the 11n protocol, an LDPC codeword length $L_{LDPC,tl}$, a quantity $N_{CW,tl}$ of LDPC codewords, a quantity $N_{shrt,tl}$ of shortened bits, and a quantity $N_{punc,tl}$ of punctured bits that are required by each tile.

(f) Determine a value of an LDPC extra symbol field. As long as one tile meets the following formula, the value of the LDPC extra symbol field is 1; otherwise, the value of the LDPC extra symbol field is 0.

$$((N_{punc,tl} > 0.1 \cdot N_{CW,tl} \cdot L_{LDPC,tl} \cdot (1 - R_{tl})) \& \&(N_{shrt,tl} < 1.2 \cdot N_{punc,tl} \cdot \frac{R_{tl}}{1 - R_{tl}}))$$

$$\| (N_{punc,tl} > 0.3 \cdot N_{CW,tl} \cdot L_{LDPC,tl} \cdot (1 - R_{tl}))$$

(g) If the LDPC extra symbol field is equal to 1, update a total valid encoding length $N_{avbits,tl}$ and a quantity $N_{punc,tl}$ of punctured bits of each tile:

$$N_{avbits,tl} = \begin{cases} N_{avbits,tl} + N_{CBPS,tl} - 3 \cdot N_{CBPS,short,tl}, if \ a_{init,tl_{max}} = 3 \\ N_{avbits,tl} + N_{CBPS,short,tl}, otherwise \end{cases}$$

$$N_{punc,tl} = \max(0, (N_{CW,tl} \cdot L_{LDPC,tl}) - N_{avbits,tl} - N_{shrt,tl}$$

(h) Determine final $N_{sym}$ and a for all the tiles.

When the LDPC extra symbol field is equal to 1, final $N_{sym}$ and a meet the following formula:

$$\begin{cases} N_{sym} = N_{sym,init,tl_{max}} + 1 \quad and \quad a = 1, if \ a_{init,tl_{max}} = 4 \\ N_{sym} = N_{sym,init,tl_{max}} \quad and \quad a = a_{init,tl_{max}} + 1, otherwise \end{cases}$$

When the LDPC extra symbol field is equal to 0, final $N_{sym}$ and a meet the following formula:

$$\begin{cases} N_{sym} = N_{sym,init,tl_{max}} \\ a = a_{init,tl_{max}} \end{cases}$$

(i) Update the quantity of encoded bits of the last symbol of each tile, where the quantity of valid data bits of the last symbol does not need to be updated:

$$N_{DBPS,last,tl} = N_{DBPS,last,init,tl}$$

$$N_{CBPS,last,tl} = \begin{cases} a \cdot N_{CBPS,short,tl}, \quad if \ a < 4 \\ N_{CBPS,tl}, \quad if \ a = 4 \end{cases}$$

(j) Calculate a quantity of pre-FEC padded (pre-FEC padding) bits of each tile:

$$N_{PAD,Pre-FEC} = (N_{sym,init,tl_{max}} - 1) \times N_{DBPS,tl} + N_{DBPS,last,init,tl} - 8 \times PSDU\_LENGTH_{tl} - N_{service}$$

(6) Perform scrambling and low density parity check code (low density parity check code, LDPC) encoding processing on each tile.
(7) Calculate a quantity of post-FEC padded (post-FEC padding) bits of each tile:

$$N_{PAD,Post-FEC,tl} = N_{CBPS,tl} - N_{CBPS,last,tl}$$

(8) Separately map the foregoing calculated bit results of the tiles to $N_{sd,tl}$ valid subcarriers of $N_{ss,tl}$ spatial flows included in corresponding sub-channels.
(9) For another process, refer to the existing 802.11be protocol. Details are not described herein.

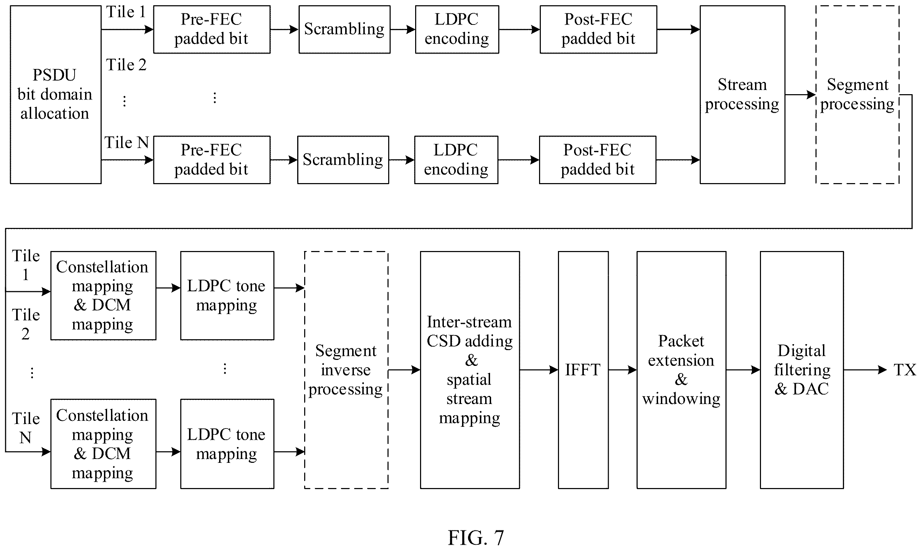

FIG. 7 is a block diagram of a possible processing procedure in which a transmitter device generates a PPDU according to this application. The processing procedure includes: PSDU bit domain allocation (that is, the L MPDUs are allocated to the N tiles), pre-FEC bit padding, scrambling, LDPC encoding, post-FEC bit padding, stream processing, segment processing required for an RU/MRU greater than 996 tones, constellation mapping and subcarrier mapping (including LDPC tone mapping), segment inverse processing required for an RU/MRU greater than 996 tones, spatial stream mapping, inverse fast Fourier transform (inverse fast Fourier transform, IFFT) through which a signal is converted into a time-domain signal, and transmitting the time-domain signal through an antenna. A difference between the processing procedure and a conventional manner in which the transmitter device generates the PPDU lies in that, in the processing procedure, PSDU bit domain allocation, pre-FEC bit padding, scrambling, LDPC encoding, post-FEC bit padding, constellation mapping, and subcarrier mapping are implemented through tile-based allocation. PSDU bit domain allocation corresponds to step (1) to step (4) in S510, pre-FEC bit padding corresponds to step (5) in S510, scrambling and LDPC encoding correspond to step (6) in S510, post-FEC bit padding corresponds to step (7) in S510, and stream processing, segment processing required for an RU/MRU greater than 996 tones, constellation mapping, and subcarrier mapping correspond to step (8) in S510.

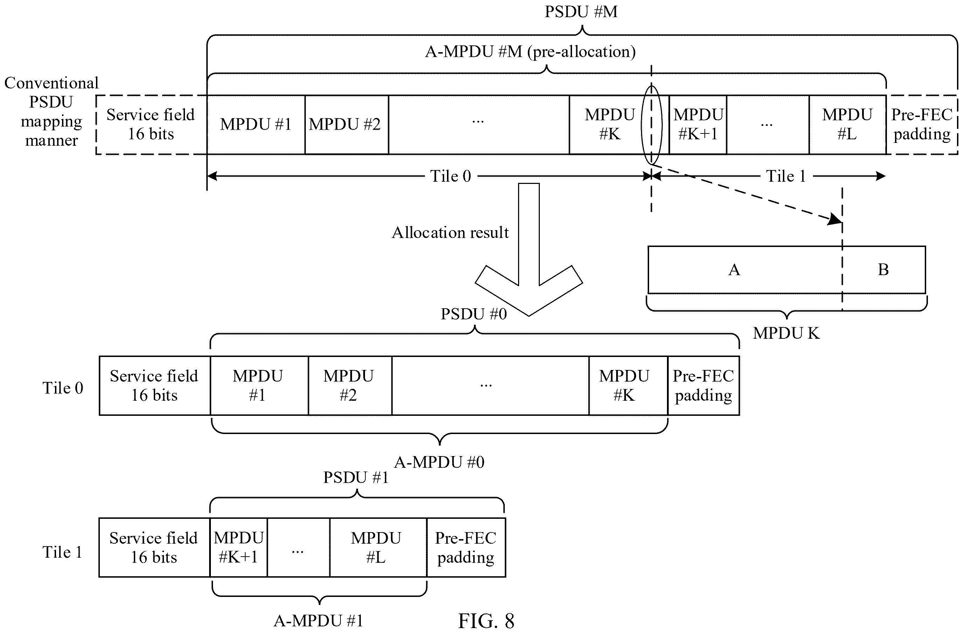

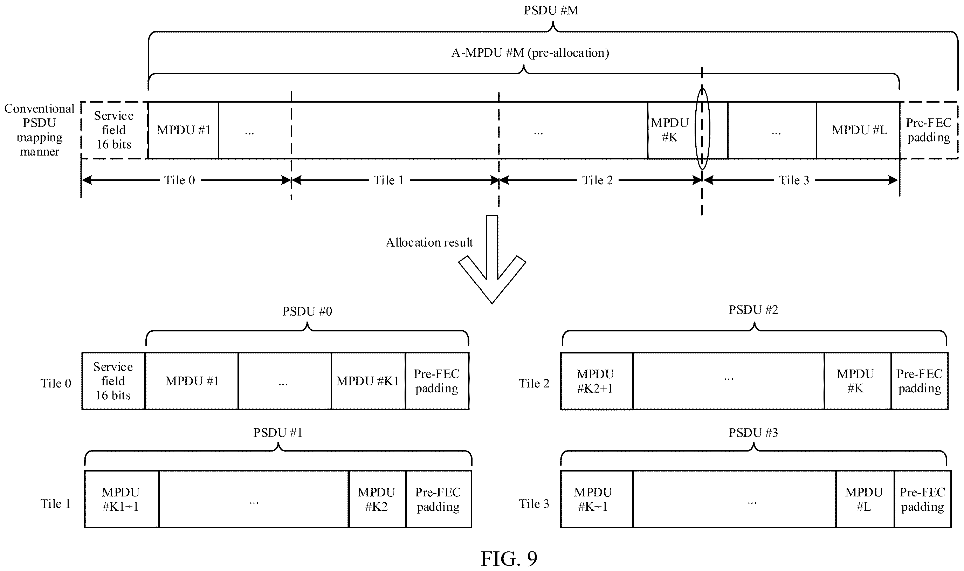

The following uses examples to describe implementation processes of two specific PSDU subcarrier mapping methods with reference to FIG. 8 and FIG. 9. A difference between the PSDU subcarrier mapping method shown in FIG. 8 and the PSDU subcarrier mapping method shown in FIG. 9 lies in that, in a tile-based allocation manner shown in FIG. 8, an extremely high throughput (extremely high throughput, EHT) MRU bandwidth and a remaining non-MRU bandwidth are allocated; and in a tile-based allocation manner shown in FIG. 9, a full bandwidth (the channel #1) is evenly segmented.

The following describes the PSDU subcarrier mapping method shown in FIG. 8. In the method, the channel #1 is pre-segmented based on the EHT MRU bandwidth and the remaining non-MRU bandwidth. A sum of the MRU bandwidth and the remaining non-MRU bandwidth is 2, and the channel #1 is segmented based on N=2, where two sub-channels one-to-one correspond to the two bandwidths. The method may include the following steps.

Step 1: As shown in FIG. 8, a PPDU generated in a conventional PSDU mapping manner includes a service field and a PSDU #M, where the PSDU #M includes an A-MPDUL #M and a quantity of corresponding pre-FEC padded bits, and the A-MPDUL #M includes L MPDUs. In this case, based on the new PSDU subcarrier mapping manner provided in this application, the transmitter device may pre-allocate the L MPDUs received from the MAC layer to two tiles, and the two tiles are denoted as the tile 0 (tile 0) and the tile 1 (tile 1). Specifically, a quantity of MPDUs finally included in the two tiles is obtained by approximately allocating the L MPDUs based on a proportion (namely, $N_{DBPS}(tile0): N_{DBPS}(tile1)$) of a quantity $N_{DBPS}(tile0)$ of valid data bits that can be carried on one symbol of a sub-channel corresponding to the tile 0 to a quantity $N_{DBPS}(tile1)$ of valid data bits that can be carried on one symbol of a sub-channel corresponding to the tile 1. For calculation manners of $N_{DBPS}(tile0)$ and $N_{DBPS}(tile1)$, refer to descriptions about step (2) in S510. Details are not described herein again.

As shown in FIG. 8, after pre-allocation, an MPDU #1 to an MPDU #K-1 are all pre-allocated to the tile 0, and an MPDU #K+1 to an MPDU #L are all pre-allocated to the tile 1. An MPDU #K includes two parts: A and B, the part A of the MPDU #K is pre-allocated to the tile 0, and the part B of the MPDU #K is pre-allocated to the tile 1.

Step 2: The pre-allocated non-cross-tile MPDU is directly allocated to the pre-allocated tile, that is, the MPDU #1 to the MPDU #K-1 are finally allocated to the tile 0, and the MPDU #K+1 to the MPDU #L are allocated to the tile 1; and the cross-tile MPDU #K is allocated, based on a preset condition, to a tile that is in the two pre-allocated tiles and that meets the condition. For a possible preset condition, refer to step (3) in S510. Details are not described again. For example, the MPDU #K is finally allocated to the tile 0 based on an allocation result in FIG. 8.

Step 3: Repeatedly allocate (or repeatedly map) the service field generated by the transmitter device at a physical layer to each tile, to improve a decoding probability of a scrambling seed. As shown in FIG. 8, the service field is repeatedly mapped to the tile 0 and the tile 1 in the tile allocation result.

Step 4: Calculate the quantity of pre-FEC padded (pre-FEC padding) bits. Step 4 includes step (a) to step (j).

(a) Calculate a quantity $N_{sym,init,tl}$ of initial symbols and an a factor $a_{init,tl}$ of each tile. A calculation process is as follows: It should be understood that, in this application, calculation processes of parameters corresponding to the tiles are the same, and only a calculation process corresponding to one tile is used as an example for description.

$$N_{sym,init,tl} = \left\lceil \frac{8 \times PSDU\_LENGTH_{tl} + N_{service}}{N_{DBPS,tl}} \right\rceil$$

$$N_{Excess,tl} = \mathrm{mod}(8 \times PSDU\_LENGTH_{tl} + N_{service}, N_{DBPS,tl})$$

*PSDU_LENGTH*$_{tl}$ is a length of the A-MPDU of corresponding tiles, a unit length occupies 1 byte, and $N_{service}$ is a quantity of valid bits occupied by the service domain.

$$a_{init,tl} = \begin{cases} 4, & if \ N_{Excess,tl} = 0 \\ \min\left(\left\lceil \dfrac{N_{Excess,tl}}{N_{DBPS,short,tl}} \right\rceil, 4\right), & otherwise \end{cases}$$

$N_{DBPS,short,tl} = N_{CBPS,short,tl} \cdot R_{tl} = N_{sd,short,tl} \cdot N_{ss,tl} \cdot N_{BPSCS,tl} \cdot R_{tl}$, where $N_{sd,short,tl}$ may be determined according to Table 36-46 in the P802.11be_D1.3 protocol.
(b) Search for a tile with a largest encoding length from all tiles according to the following formula:

$$\arg\max(f(tl_{max})) = \arg\max_{tl=0}^{N_{tl}-1}(N_{sym,init,tl} - 1 + \frac{a_{init,tl}}{4})$$

The tile is denoted as $tl_{max}$, and $N_{sym,init,tlmax}$ and $a_{init,tlmax}$ corresponding to $tl_{max}$ are used for all subsequent tiles.

(c) Calculate a quantity of valid data bits and a quantity of encoded bits of a last symbol of each tile based on $a_{init,tlmax}$:

$$N_{DBPS,last,init,tl} = \begin{cases} a_{init,tl_{max}} \cdot N_{DBPS,short,tl}, & if \ a_{init,tl_{max}} < 4 \\ N_{DBPS,tl}, & if \ a_{init,tl_{max}} = 4 \end{cases}$$

$$N_{CBPS,last,init,tl} = \begin{cases} a_{init,tl_{max}} \cdot N_{CBPS,short,tl}, & if \ a_{init,tl_{max}} < 4 \\ N_{CBPS,tl}, & if \ a_{init,tl_{max}} = 4 \end{cases}$$

(d) Calculate a total data length $N_{pld,tl}$ and a valid encoding length $N_{avbits,tl}$ of each tile:

$$N_{pld,tl} = (N_{sym,init,tl_{max}} - 1) \cdot N_{DBPS,tl} + N_{DBPS,last,init,tl}$$

$$N_{avbits,tl} = (N_{sym,init,tl_{max}} - 1) \cdot N_{CBPS,tl} + N_{CBPS,last,init,tl}$$

(e) Determine, based on a low density parity check code (low density parity check code, LDPC) PPDU encoding process in the 11n protocol, an LDPC codeword length $L_{LDPC,tl}$, a quantity $N_{CW,tl}$ of LDPC codewords, a quantity $N_{shrt,tl}$ of shortened bits, and a quantity $N_{punc,tl}$ of punctured bits that are required by each tile.
(f) Determine a value of an LDPC extra symbol field. As long as one tile meets the following formula, the value of the LDPC extra symbol field is 1; otherwise, the value of the LDPC extra symbol field is 0.

$$((N_{punc,tl} > 0.1 \cdot N_{CW,tl} \cdot L_{LDPC,tl} \cdot (1 - R_{tl})) \ \& \&(N_{shrt,tl} < 1.2 \cdot N_{punc,tl} \cdot \frac{R_{tl}}{1 - R_{tl}}))$$

$$|| (N_{punc,tl} > 0.3 \cdot N_{CW,tl} \cdot L_{LDPC,tl} \cdot (1 - R_{tl}))$$

(g) If the LDPC extra symbol field is equal to 1, update a total valid encoding length $N_{avbits,tl}$ and a quantity $N_{punc,tl}$ of punctured bits of each tile:

$$N_{avbits,tl} = \begin{cases} N_{avbits,tl} + N_{CBPS,tl} - 3 \cdot N_{CBPS,short,tl}, & if \ a_{init,tl_{max}} = 3 \\ N_{avbits,tl} + N_{CBPS,short,tl}, & otherwise \end{cases}$$

$$N_{punc,tl} = \max(0, (N_{CW,tl} \cdot L_{LDPC,tl}) - N_{avbits,tl} - N_{shrt,tl}$$

(h) Determine final $N_{sym}$ and a for all the tiles.

When the LDPC extra symbol field is equal to 1, final $N_{sym}$ and a meet the following formula:

$$\begin{cases} N_{sym} = N_{sym,init,tl_{max}} + 1 & and \quad a = 1, if \ a_{init,tl_{max}} = 4 \\ N_{sym} = N_{sym,init,tl_{max}} & and \quad a = a_{init,tl_{max}} + 1, otherwise \end{cases}$$

When the LDPC extra symbol field is equal to 0, final $N_{sym}$ and a meet the following formula:

$$\begin{cases} N_{sym} = N_{sym,init,tl_{max}} \\ a = a_{init,tl_{max}} \end{cases}$$

(i) Update the quantity of encoded bits of the last symbol of each tile, where the quantity of valid data bits of the last symbol does not need to be updated:

$$N_{DBPS,last,tl} = N_{DBPS,last,init,tl}$$

$$N_{CBPS,last,tl} = \begin{cases} a \cdot N_{CBPS,short,tl}, & if \ a < 4 \\ N_{CBPS,tl}, & if \ a = 4 \end{cases}$$

(j) Calculate a quantity of pre-FEC padded (pre-FEC padding) bits of each tile:

$$N_{PAD,Pre-FEC} = (N_{sym,init,tl_{max}} - 1) \times N_{DBPS,tl} + N_{DBPS,last,init,tl} - 8 \times PSDU\_LENGTH_{tl} - N_{service}$$

A quantity of pre-FEC padded bits of each tile is allocated to a corresponding tile. As shown in FIG. 8, the tile #0 includes one service field and a PSDU #0, the PSDU #0 includes an A-MPDU #0 and a quantity of pre-FEC padded bits of the tile 0, and the A-MPDUL #0 includes the MPDU #1 to the MPDU #K. The tile #1 includes one service field and a PSDU #1, the PSDU #1 includes an A-MPDU #1 and a quantity of pre-FEC padded bits of the tile 1, and the A-MPDUL #1 includes the MPDU #K+1 to the MPDU #L.

Step 5: Perform scrambling and LDPC encoding on each tile.

Step 6: Calculate a quantity of post-FEC padded (post-FEC padding) bits of each tile:

$$N_{PAD,Post-FEC,tl} = N_{CBPS,tl} - N_{CBPS,last,tl}$$

Step 7: Separately map the foregoing calculated bit results of the tiles to $N_{sd,tl}$ valid subcarriers of $N_{ss,tl}$ spatial flows included in corresponding sub-channels.

The following continues to describe the PSDU subcarrier mapping method shown in FIG. 9. In the method, a full bandwidth (namely, a bandwidth of the channel #1) is evenly segmented into N (N=4) parts. For example, the bandwidth of the channel #1 is 160 MHz, the bandwidth of the channel #1 is evenly segmented into four parts, and each sub-channel corresponds to a 484-tone RU. The method may include the following steps.

Step 1: As shown in FIG. 9, a PPDU generated in a conventional PSDU mapping manner includes a service field and a PSDU #M, where the PSDU #M includes an A-MPDUL #M and a quantity of corresponding pre-FEC padded bits, and the A-MPDUL #M includes L MPDUs. In this case, based on the new PSDU subcarrier mapping manner provided in this application, a transmitter considers the L MPDUs received from a MAC layer and the service field generated at a physical layer as a whole, and evenly pre-allocate the L MPDUs and the service field to four tiles based on the service field and a length occupied by the L MPDUs, where the four tiles are denoted as a tile 0 (tile 0), a tile 1 (tile 1), a tile 2 (tile 2), and a tile 3 (tile 3).

Step 2: A pre-allocated non-cross-tile MPDU is directly allocated to a pre-allocated tile. For a manner of allocating a cross-tile MPDU, refer to the descriptions in step 2 in FIG. 8. Details are not described herein again.

As shown in FIG. 9, for example, the service field and an MPDU #1 to an MPDU #K1 in the A-MPDU #M are finally allocated to the tile 0, an MPDU #K1+1 to an MPDU #K2 in the A-MPDU #M are allocated to the tile 1, an MPDU #K2+1 to an MPDU #K in the A-MPDU #M are allocated to the tile 2, and an MPDU #K+1 to an MPDU #L in the A-MPDU #M are allocated to the tile 3.

For example, the tile 0 in which the service field is located in FIG. 9 is mapped to a sub-channel including a primary channel, to reduce an interference probability.

Step 3: Calculate a quantity of pre-FEC padded bits of each tile:

(a) Calculate a quantity $N_{sym,init,tl}$ of initial symbols and an a factor $a_{init,tl}$ of each tile.

It should be understood that because the tile 0 includes the service domain, compared with the tile 1, the tile 2, and the tile 3, the tile 0 has an $N_{service}$ part in a total quantity of valid bits. A process of calculating a quantity $N_{sym,init,tl}$ of initial symbols and an a factor $a_{init,tl}$ of any one of the tile 0, the tile 1, the tile 2, and the tile 3 is as follows:

$$N_{sym,init,tl} = \left\lceil \frac{8 \times PSDU\_LENGTH_{tl} + N_{service}}{N_{DBPS,tl}} \right\rceil, N_{service} = \begin{cases} 16, tile0 \\ 0, other\ tile \end{cases}$$

$$N_{Excess,tl} = \mathrm{mod}(8 \times PSDU\_LENGTH_{tl} + N_{service}, N_{DBPS,tl})$$

$PSDU\_LENGTH_{tl}$ is a length of the A-MPDU of corresponding tiles, a unit length occupies 1 byte, and $N_{service}$ is a quantity of valid bits occupied by the service field.

$$a_{init,tl} = \begin{cases} 4, & if\ N_{Excess,tl} = 0 \\ \min\left( \left\lceil \frac{N_{Excess,tl}}{N_{DBPS,short,tl}} \right\rceil, 4 \right), & otherwise \end{cases}$$

$$N_{DBPS,short,tl} = N_{CBPS,short,tl} \cdot R_{tl} = N_{sd,short,tl} \cdot Nss \cdot N_{BPSCS,tl} \cdot R_{tl}$$

For calculation processes of step (b) to step (j) included in step 3, refer to step (b) to step (j) in FIG. 8. Details are not described herein again.

A quantity of pre-FEC padded bits of each tile is allocated to a corresponding tile. As shown in FIG. 9, the tile #0 includes one service field and a PSDU #0, the PSDU #0 includes an A-MPDU #0 and a quantity of pre-FEC padded bits of the tile 0, and the A-MPDUL #0 includes the MPDU #1 to the MPDU #K. The tile #1 includes a PSDU #1, the PSDU #1 includes an A-MPDU #1 and a quantity of pre-FEC padded bits of the tile 1, and the A-MPDUL #1 includes the MPDU #K+1 to the MPDU #K1. The tile #2 includes a PSDU #2, the PSDU #2 includes an A-MPDU #2 and a quantity of pre-FEC padded bits of the tile 2, and the A-MPDUL #2 includes the MPDU #K1+1 to the MPDU #K2. The tile #3 includes a PSDU #3, the PSDU #3 includes an A-MPDU #3 and a quantity of pre-FEC padded bits of the tile 3, and the A-MPDUL #3 includes the MPDU #K2+1 to the MPDU #L.

Step 4: Perform scrambling and LDPC encoding on each tile.

Step 5: Calculate a quantity of post-FEC padded (post-FEC padding) bits of each tile:

$$N_{PAD,Post-FEC,tl} = N_{CBPS,tl} - N_{CBPS,last,tl}$$

Step 6: Separately map the foregoing calculated bit results of the tiles to valid subcarriers included in corresponding sub-channels.

It can be learned that the PSDU subcarrier mapping manner provided in this application in this step is different from a conventional data frame format. The PSDU subcarrier mapping manner in this application uses technologies of PSDU segmenting through tile-based allocation, and encoding and subcarrier mapping through tile-based allocation. Therefore, MPDUs in a frequency band with interference and a frequency band without interference can be independent of each other. For interference that randomly arrives in a frequency band, regardless of continuous interference or instantaneous interference, data receiving in the frequency band without interference is not affected. In addition, this does not cause a spectrum resource waste, and improves spectral utilization and a total system throughput.

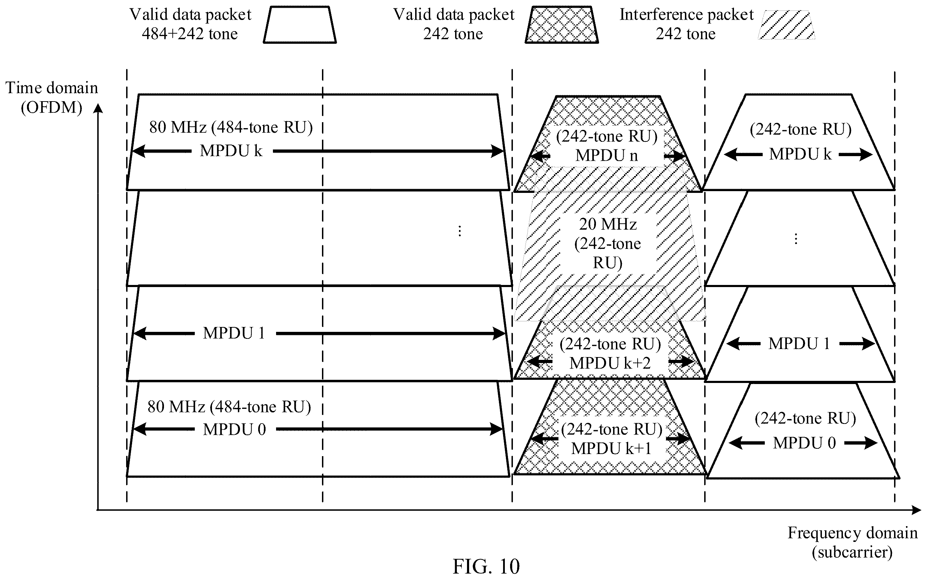

An example is used to describe beneficial effect with reference to FIG. 10. In the scenario shown in FIG. 1, mapping is performed by using the PSDU subcarrier mapping method provided in FIG. 8. In FIG. 1, a bandwidth of a valid frequency band is 80 MHz, and the 80 MHz bandwidth is segmented for two sub-channels. A 20 MHz bandwidth occupied by the frequency band with interference is for a sub-channel #1, the 20 MHz bandwidth includes a 242-tone RU, the remaining 60 MHz bandwidth is for a sub-channel #2, and the 60 MHz bandwidth includes a 484+242-tone RU. An MPDU 0 to an MPDU K are transmitted through the sub-channel #1, and an MPDU K+1 to an MPDU n are transmitted through the sub-channel #2. In this way, the MPDUs in the frequency band with interference and the frequency band without interference can be independent of each other, and the wasted resources in FIG. 2 can still be used. This achieves the foregoing technical effect.

S520: The transmitter device sends the PPDU through the N sub-channels.

Correspondingly, the receiver device receives the PPDU through the N sub-channels.

S530: The receiver device parses the PPDU. A specific parsing manner is not described herein again.

This application further provides a diagram of a new Wi-Fi frame format based on the PSDU subcarrier mapping manner provided in this application.

The PPDU includes a signaling field (Signaling Field, SIG), the SIG field includes a first subfield and a second subfield, the first subfield indicates a tile-based allocation manner of the PSDU (namely, the PSDU subcarrier mapping manner), and the second subfield indicates a mapping manner of the service field in the N tiles. Optionally, the SIG field further includes a third subfield, and the third subfield indicates a modulation order used by the N tiles. Optionally, the SIG field further includes a fourth subfield, and the fourth subfield indicates a quantity of spatial streams used by the N tiles.

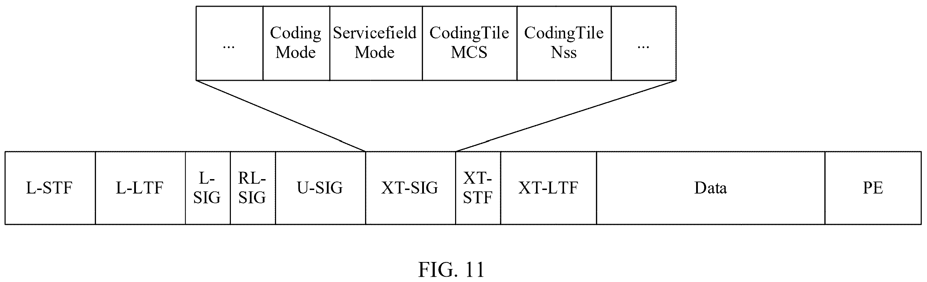

FIG. 11 is a diagram of a possible frame structure of a PPDU according to this application. The frame structure of the PPDU includes a preamble part and protocol-related long and short estimation training fields, data, and packet extension (packet extension, PE). The preamble part includes a legacy short training field (Legacy Short Training Field, L-STF), a legacy long training field (Legacy Long Training Field, L-LTF), a legacy signaling symbol (Legacy Signaling Field, L-SIG), a repeated legacy signaling symbol (repeated Legacy Signaling Field, RL-SIG), and a protocol-related signaling field like a U-SIG field or an XT-SIG field. The protocol-related long and short estimation training fields include an XT-STF and an XT-LTF, which are respectively used for automatic gain control and channel estimation to demodulate the data part. The data includes the service field, the PSDU, and the tile domain.

In the frame structure, Coding Mode (namely, an example of the first subfield), ServiceField Mode (namely, an example of the second subfield), CodingTile MCS (namely, an example of the third subfield), and CodingTile Nss (namely, an example of the fourth subfield) are added to the XT-SIG field. For example, Coding Mode=0 indicates a conventional PSDU subcarrier mapping mode, Coding Mode=1 indicates that tile-based allocation is performed based on a quantity of MRU parts and a quantity of non-MRU parts for PSDU subcarrier mapping, and Coding Mode=2 indicates that the bandwidth is evenly segmented into four parts corresponding to the tiles for PSDU subcarrier mapping. Servicefield Mode=0 indicates that mapping is performed from a low frequency to a high frequency in a conventional manner, Servicefield Mode=1 indicates that the service field is repeatedly mapped to each tile, and Servicefield Mode=2 indicates that the service field is mapped to the tile in which the primary channel is located. CodingTile MCS indicates an MCS, namely, a modulation order, used by each tile. CodingTile Nss indicates an Nss, namely, a quantity of spatial streams, used by each tile.

It should be noted that the tile in this application needs to be sent together with the long and short estimation training fields. A processing manner of the existing preamble puncturing technology may be used for the preamble part, for example, the preamble part is not sent through a sub-channel with interference, or is sent at reduced power.

The foregoing describes in detail the data transmission method provided in this application. The following describes communication apparatuses provided in this application. In a possible implementation, the apparatus is configured to implement steps or procedures corresponding to the receiver device in the foregoing method embodiments. In another possible implementation, the apparatus is configured to implement steps or procedures corresponding to the transmitter device in the foregoing method embodiments.

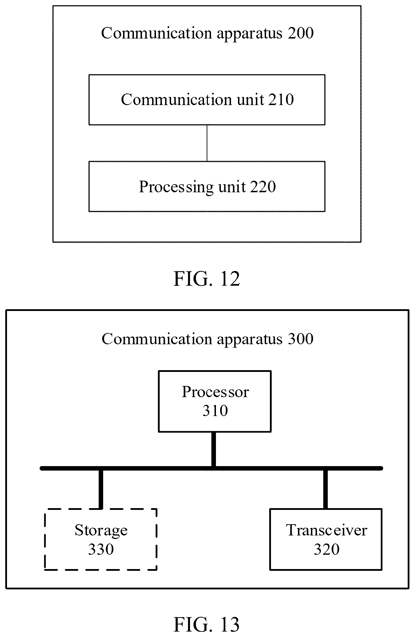

FIG. 12 is a block diagram of a communication apparatus 200 according to an embodiment of this application. As shown in FIG. 12, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the transmitter device in the foregoing method embodiments. The processing unit 220 is configured to perform processing-related operations of the transmitter device in the foregoing method embodiments, and the communication unit 210 is configured to perform sending-related operations of the transmitter device in the foregoing method embodiments.

In another possible design, the apparatus 200 may implement steps or procedures performed by the receiver device in the foregoing method embodiments. The communication unit 210 is configured to perform receiving-related operations of the receiver device in the foregoing method embodiments, and the processing unit 220 is configured to perform processing-related operations of the receiver device in the foregoing method embodiments.

It should be understood that the apparatus 200 herein is embodied in a form of functional units. The term "unit" herein may refer to an application-specific integrated circuit (application-specific integrated circuit, ASIC), an electronic circuit, a processor (for example, a shared processor, a special-purpose processor, or a group processor) configured to execute one or more software or firmware programs, a storage, a merged logic circuit, and/or another appropriate component that supports the described functions. In an optional example, a person skilled in the art may understand that the apparatus 200 may be specifically the transmitter device in the foregoing embodiments, and may be configured to perform procedures and/or steps corresponding to the transmitter device in the foregoing method embodiments. Alternatively, the apparatus 200 may be specifically the receiver device in the foregoing embodiments, and may be configured to perform procedures and/or steps corresponding to the receiver device in the foregoing method embodiments. To avoid repetition, details are not described herein again.

The apparatus 200 in each of the foregoing solutions has functions of implementing corresponding steps performed by the transmitter device in the foregoing method, or the apparatus 200 in each of the foregoing solutions has functions of implementing corresponding steps performed by the receiver device in the foregoing method. The functions may be implemented by hardware, or may be implemented by hardware executing corresponding software. The hardware or software includes one or more modules corresponding to the foregoing functions. For example, the communication unit may be replaced by a transceiver (for example, a sending unit in the communication unit may be replaced by a transmitter, and a receiving unit in the communication unit may be replaced by a receiver), and another unit like the processing unit may be replaced by a processor, to separately perform a sending/receiving operation and a related processing operation in each method embodiment.

In addition, alternatively, the communication unit may be a transceiver circuit (for example, may include a receiving circuit and a sending circuit), and the processing unit may be a processing circuit. In embodiments of this application, the apparatus in FIG. 12 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 13 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a storage 330. The storage 330 communicates with the processor 310 and the transceiver 320 through internal connection paths. The storage 330 is configured to store instructions, and the processor 310 may execute the instructions stored in the storage 330. In a possible implementation, the apparatus 300 is configured to implement procedures and steps corresponding to the transmitter device in the foregoing method embodiments. In another possible implementation, the apparatus 300 is configured to implement procedures and steps corresponding to the receiver device in the foregoing method embodiments.

It should be understood that the apparatus 300 may be specifically the transmitter device or the receiver device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the transmitter device or the receiver device in the foregoing method embodiments. Optionally, the storage 330 may include a read-only memory and a random access memory, and provide instructions and data for the processor. Apart of the storage may further include a non-volatile random access memory. For example, the storage may further store information of a device type. The processor 310 may be configured to execute the instructions stored in the storage; and when the processor 310 executes the instructions stored in the storage, the processor 310 is configured to perform steps and/or procedures corresponding to the transmitter device or the receiver device in the foregoing method embodiments.

In an implementation process, steps in the methods can be completed by using a hardware integrated logical circuit in the processor, or by using instructions in a form of software. The steps in the method disclosed with reference to embodiments of this application may be directly performed and completed by a hardware processor, or performed and completed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the storage, and the processor reads information in the storage and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the method embodiments can be completed by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or performed and completed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the storage, and the processor reads information in the storage and completes the steps in the foregoing methods in combination with hardware of the processor.

It may be understood that the storage in embodiments of this application may be a volatile storage or a non-volatile storage, or may include both a volatile storage and a non-volatile storage. The non-volatile storage may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), and is used as an external cache. By way of example rather than limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the storages of the systems and methods described in this specification include but are not limited to these and any storage of another proper type.

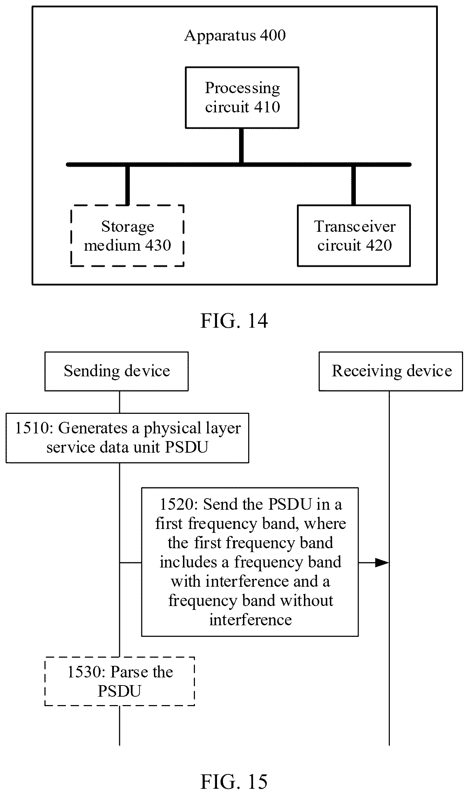

FIG. 14 is a diagram of a communication apparatus 400 according to an embodiment of this application. The apparatus 400 includes a processing circuit 410 and a transceiver circuit 420. The processing circuit 410 and the transceiver circuit 420 communicate with each other through an internal connection path, and the processing circuit 410 is configured to execute instructions, to control the transceiver circuit 420 to send a signal and/or receive a signal.

Optionally, the apparatus 400 may further include a storage medium 430. The storage medium 430 communicates with the processing circuit 410 and the transceiver circuit 420 through internal connection paths. The storage medium 430 is configured to store instructions, and the processing circuit 410 may execute the instructions stored in the storage medium 430. In a possible implementation, the apparatus 400 is configured to implement procedures and steps corresponding to the transmitter device in the foregoing method embodiments. In another possible implementation, the apparatus 400 is configured to implement procedures and steps corresponding to the receiver device in the foregoing method embodiments. In addition, this application further provides a computer-readable storage medium. The computer-readable storage medium stores computer instructions. When the computer instructions are run on a computer, the method in the method embodiments of this application is performed.

According to the method provided in embodiments of this application, this application further provides a computer program product. The computer program product includes computer program code or instructions. When the computer program code or the instructions are run on a computer, the method in the method embodiments of this application is performed.

According to the method provided in embodiments of this application, this application further provides a computer-readable medium. The computer-readable medium stores program code. When the program code is run on a computer, the computer is enabled to perform the method in the foregoing embodiments of this application.

In addition, this application further provides a chip, and the chip includes a processor. A storage configured to store a computer program is disposed independent of the chip. The processor is configured to execute the computer program stored in the storage, so that the method in the method embodiments of this application is performed.

Further, the chip may include a communication interface. The communication interface may be an input/output interface, an interface circuit, or the like. Further, the chip may include the storage.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into units is merely division into logical functions and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

Units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

The following describes technical solutions in embodiments of this application with reference to accompanying drawings.

Embodiments of this application may be applied to a wireless local area network (wireless local area network, WLAN). Currently, a standard used for the WLAN is the Institute of Electrical and Electronics Engineers (Institute of Electrical and Electronics Engineers, IEEE) 802.11 series. The WLAN may include a plurality of basic service sets (basic service set, BSS). Network nodes in the BSS are a station (station, STA) and an access point (access point, AP). Each BSS may include one AP and a plurality of STAs associated with the AP.

The AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports a plurality of WLAN standards such as 802.11a/b/g, 802.11n, 802.11ac, 802.11ax, and 802.11be or a later version that is currently being discussed.

The access point in this application may be a high efficiency (high efficiency, HE) STA, an extremely high throughput (extremely high throughput, EHT) STA, or a STA applicable to a future-generation Wi-Fi standard.

For example, the access point and the station may be devices used in the Internet of vehicles, Internet of things nodes or sensors in the Internet of things (Internet of things, IoT), smart cameras, smart remote controls, and smart water meters in a smart home, and sensors in a smart city.

The STA in embodiments of this application may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, and a computer supporting a Wi-Fi communication function. Optionally, the STA may support an 802.11ax standard. Further, optionally, the STA supports a plurality of WLAN standards such as 802.11ac, 802.11n, 802.11g, 802.11b, and 802.11a, or a subsequent version.

In embodiments of this application, the STA or the AP includes a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that the execution body can run a program that records code of the method provided in embodiments of this application to perform communication according to the method provided in embodiments of this application. For example, the execution body of the method provided in embodiments of this application may be a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

Alternatively, embodiments of this application are applicable to a wireless local area network system, for example, an Internet of things (Internet of things, IoT) network or a vehicle-to-everything (Vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for description, and the communication systems applicable to this application are not limited thereto. This is uniformly described herein, and details are not described below again.

FIG. 3 is a diagram of a network architecture of a wireless local area network to which an embodiment of this application is applicable. As shown in (a) in FIG. 3, one BSS may include one AP and one or more STAs associated with the AP. The network architecture of the wireless local area network may further include a plurality of BSSs. For example, (b) in FIG. 3 shows two BSSs, and the two BSSs partially overlap, namely, an OBSS. The BSS #1 includes an AP #1, a STA 11, a STA 12, and a STA 13, and the BSS #2 includes an AP #2, a STA 21, a STA 22, and a STA 23. The STA 11, the STA 12, the STA 22, and the STA 23 are mutually overlapping parts of the two BSSs. Each BSS includes one AP and a plurality of STAs. In one BSS, data may be transmitted between an AP and each STA, and data may be transmitted between a plurality of STAs. The AP #1 may also communicate with the AP #2, and STAs included in the two BSSs may also communicate with each other.

It should be understood that FIG. 3 is merely an example and should not constitute a limitation on the network architecture of the wireless local area network to which this application is applicable. For example, the network architecture may alternatively include more BSSs, each BSS may alternatively include more STAs, or some BSSs may alternatively not include an AP. An area in which a plurality of BSSs overlap may alternatively include more STAs, or the like. This is not limited herein in embodiments of this application.

It can be learned from foregoing that, in an interference scenario with a high duty cycle, the MRU and preamble puncturing technologies can effectively improve overall performance. However, a spectrum resource waste may still exist. In addition, most interference scenarios actually have a moderate or lower duty cycle. Consequently, when the foregoing solution is used, spectral efficiency in an entire bandwidth cannot be properly used. Especially for burst and temporary hidden interference, it is difficult to identify a location of the interference in real time, and the interference cannot be properly avoided by using the preamble puncturing technology, resulting in a great decrease in a system throughput.

In view of this, this application further provides a new Wi-Fi frame format that relates to a new PSDU subcarrier mapping manner, which is referred to as a preamble puncturing+ technology. In comparison with a conventional frame format, segment encoding and subcarrier mapping technologies are used in this application. As shown in FIG. 10, MPDUs in a frequency band with interference and a frequency band without interference can be independent of each other, and BA bitmap information is separately replied. For interference that randomly arrives in a frequency band, regardless of continuous interference or instantaneous interference, data receiving in the frequency band without interference is not affected. In addition, this does not cause a spectrum resource waste.

FIG. 7 is a block diagram of a transmitter according to this application, and includes: PSDU bit domain allocation, pre-FEC bit padding, scrambling, LDPC encoding, post-FEC bit padding, stream processing, segment processing required for an RU/MRU greater than 996 tones, constellation mapping and subcarrier mapping, segment inverse processing required for an RU/MRU greater than 996 tones, spatial stream mapping, IFFT inverse conversion through which a signal is converted into a time-domain signal, and transmitting the time-domain signal through an antenna. A difference between a conventional transmitter and this transmitter lie in that, in this application, PSDU bit domain allocation, pre-FEC bit padding, scrambling, LDPC encoding, post-FEC bit padding, constellation mapping, and subcarrier mapping are implemented through tile-based allocation. The following describes specific implementations.

The technical solutions provided in this application are described in detail below with reference to the accompanying drawings.

FIG. 15 is a block diagram of a method for sending and receiving a physical layer service data unit according to an embodiment of this application. The method includes the following steps.

S1510: A sending device generates a physical layer service data unit PSDU.

S1520: The sending device sends the PSDU to a receiving device in a first frequency band, where the first frequency band includes a frequency band with interference and a frequency band without interference, and medium access control protocol data units MPDUs in the frequency band with interference and the frequency band without interference are separately transmitted via tiles. The following describes the step in detail with reference to FIG. 8 and FIG. 9.

FIG. 8 is a diagram of a PSDU subcarrier mapping manner according to an embodiment of this application. Complete data processed by a physical layer of a transmitter usually includes a service field (SERVICE Field), a PSDU length length (including MPDUs), and an FEC padding bit padded bit. Processing steps of the method are as follows:

(1) That a new PSDU subcarrier mapping manner is implemented through tile-based allocation includes tile-based allocation based on an EHT (extremely high throughput) MRU bandwidth and a remaining non-MRU bandwidth. Correspondingly, a PSDU length of each tile is approximately allocated in proportion based on a quantity of valid subcarriers of each tile.

(2) As shown in FIG. 8, the service field is repeatedly allocated to each tile, to improve a decoding probability of a scrambling seed.

(3) The PSDU length part is allocated in proportion based on an average quantity $N_{DBPS}(tile0) : N_{DBPS}(tile1)$ of bits carried in a valid carrier, and a non-cross-tile MPDU is directly allocated to each tile. A rule for allocating a cross-tile

$$\frac{A_{tot-bit}}{N_{DBPS}(tile0)} > \frac{B_{tot-bit}}{N_{DBPS}(tile1)} ? tile0 : tile1$$

cross-tile MPDU is as follows: , that is, the cross-tile MPDU is allocated to a tile with a larger average quantity of bits carried in a valid carrier.

(4) Calculate a quantity of pre-FEC padded bits.

(a) Calculate a quantity $N_{sym,init,tl}$ of initial symbols and an a factor $a_{init,tl}$ of each tile:

$$N_{sym,init,tl} = \left\lceil \frac{8 \times PSDU\_LENGTH_{tl} + N_{service}}{N_{DBPS,tl}} \right\rceil$$

$$N_{Excess,tl} = \mathrm{mod}(8 \times PSDU\_LENGTH_{tl} + N_{service}, N_{DBPS,tl}),$$

**where** $N_{DBPS,tl} = N_{sd,tl} \cdot N_{BPSCS,tl} \cdot R_{tl}$

$$a_{init,tl} = \begin{cases} 4, & if\ N_{Excess,tl} = 0 \\ \min\left(\left\lceil \dfrac{N_{Excess,tl}}{N_{DBPS,short,tl}} \right\rceil, 4\right), & otherwise \end{cases}$$

$$N_{DBPS,short,tl} = N_{CBPS,short,tl} \cdot R_{tl} = N_{sd,short,tl} \cdot Nss \cdot N_{BPSCS,tl} \cdot R_{tl}$$

(b) Search for a tile with a largest encoding length from all tiles, where a found tile is denoted as $tl_{max}$, and $N_{sym,init,tlmax}$ and $a_{init,tlmax}$ are used for all subsequent tiles:

$$\arg\max(f(tl_{\max})) = \arg\max_{tl=0}^{N_{tl}-1}(N_{sym,init,tl} - 1 + \frac{a_{init,tl}}{4})$$

(c) Calculate a quantity of data bits and a quantity of encoded bits of a last OFDM symbol of each tile based on $a_{init,tlmax}$:

$$N_{DBPS,last,init,tl} = \begin{cases} a_{init,tl_{\max}} \cdot N_{DBPS,short,tl}, & if \ a_{init,tl_{\max}} < 4 \\ N_{DBPS,tl}, & if \ a_{init,tl_{\max}} = 4 \end{cases}$$

$$N_{CBPS,last,init,tl} = \begin{cases} a_{init,tl_{\max}} \cdot N_{CBPS,short,tl}, & if \ a_{init,tl_{\max}} < 4 \\ N_{CBPS,tl}, & if \ a_{init,tl_{\max}} = 4 \end{cases}$$

(d) Calculate a total data length $N_{pld,tl}$ and a valid encoding length $N_{avbits,tl}$ of each tile:

$$N_{pld,tl} = (N_{sym,init,tl_{\max}} - 1) \cdot N_{DBPS,tl} + N_{DBPS,last,init,tl}$$

$$N_{avbits,tl} = (N_{sym,init,tl_{\max}} - 1) \cdot N_{CBPS,tl} + N_{CBPS,last,init,tl}$$

(e) Determine, based on an LDPC PPDU encoding process in the 11n protocol, an LDPC codeword length $L_{LDPC,tl}$, a quantity $N_{CW,tl}$ of LDPC codewords, a quantity $N_{shrt,tl}$ of shortened bits, and a quantity $N_{punc,tl}$ of punctured bits that are required by each tile.

(f) Determine a value of an LDPC extra symbol field, where as long as one tile meets the following condition, the value of the LDPC extra symbol field is 1; otherwise, the value of the LDPC extra symbol field is 0:

$$((N_{punc,tl} > 0.1 \cdot N_{CW,tl} \cdot L_{LDPC,tl} \cdot (1-R_{tl})) \& \&(N_{shrt,tl} < 1.2 \cdot N_{punc,tl} \cdot \frac{R_{tl}}{1-R_{tl}}))$$

$$\| (N_{punc,tl} > 0.3 \cdot N_{CW,tl} \cdot L_{LDPC,tl} \cdot (1-R_{tl}))$$

(g) If the LDPC extra symbol field is equal to 1, update a total valid encoding length $N_{avbits,tl}$ and a quantity $N_{punc,tl}$ of punctured bits of each tile:

$$N_{avbits,tl} = \begin{cases} N_{avbits,tl} + N_{CBPS,tl} - 3 \cdot N_{CBPS,short,tl}, if \ a_{init,tl_{\max}} = 3 \\ N_{avbits,tl} + N_{CBPS,short,tl}, otherwise \end{cases}$$

$$N_{punc,tl} = \max(0,(N_{CW,tl} \cdot L_{LDPC,tl}) - N_{avbits,tl} - N_{shrt,tl}$$

(h) Determine final $N_{sym}$ and a for all the tiles:

$$Ldpc\_extra\_symbol = 1:$$
$$\begin{cases} N_{sym} = N_{sym,init,tl_{\max}} + 1 \quad and \quad a = 1, if \ a_{init,tl_{\max}} = 4 \\ N_{sym} = N_{sym,init,tl_{\max}} \quad and \quad a = a_{init,tl_{\max}} + 1, otherwise \end{cases}$$

$$Ldpc\_extra\_symbol = 0:$$
$$\begin{cases} N_{sym} = N_{sym,init,tl_{\max}} \\ a = a_{init,tl_{\max}} \end{cases}$$

(i) Update the quantity of encoded bits of the last OFDM symbol of each tile, where the quantity of valid data bits does not need to be updated:

$$N_{DBPS,init,tl} = N_{DBPS,last,init,tl}$$

$$N_{CBPS,init,tl} = \begin{cases} a \cdot N_{CBPS,short,tl}, & if \ a < 4 \\ N_{CBPS,tl}, & if \ a = 4 \end{cases}$$

(j) Calculate a quantity of pre-FEC padded pre-FEC padding bits:

$$N_{PAD,Pre-FEC} = (N_{sym,init,tl_{max}} - 1) \times N_{DBPS,tl} + N_{DBPS,last,init,tl} - 8 \cdot PSDU\_LENGTH_{tl} - N_{service}$$

(5) Perform scrambling and encoding on each tile.
(6) Calculate a quantity of post-FEC padded bits of each tile:

$$N_{PAD,Post-FEC,tl} = N_{CBPS,tl} - N_{CBPS,last,tl}$$

(7) Separately map the foregoing calculated bit results to valid carriers $N_{sd,tl}$ of the MRU and non-MRU bandwidths.
(8) For another process, refer to the existing 802.11be protocol. No modification is made.

FIG. 9 is a diagram of another PSDU subcarrier mapping manner according to an embodiment of this application. The method includes the following steps.

(1) As shown in FIG. 9, the service field and the PSDU length are used as a whole, and are evenly segmented into four parts. A tile 0 in which the service field is located is allocated to a frequency band in which a primary channel is located, to reduce an interference probability.
(2) For cross-tile cross-tile MPDU processing, if the cross-tile MPDU is excessively long (greater than a specified threshold), MSDU segmenting is preferentially performed on the cross-tile MPDU. As shown in FIG. 8, the cross-tile MPDU is segmented into two or more smaller MPDUs. The MPDUs have a same sequence number, the MPDUs are distinguished by segment sequence numbers, and a last small MPDU indicates More Frag=0, which indicates that segmenting is completed. Then, the MPDUs are allocated according to the allocation rule mentioned in the embodiment shown in FIG. 8. To be specific, the segmented MPDUs are allocated in proportion based on an average quantity $N_{DBPS}(tile0) : N_{DBPS}(tile1)$ of bits carried in a valid carrier, and a non-cross-tile MPDU is directly allocated to each tile. A rule for allocating a cross-tile MPDU is as follows: $\frac{A_{tot-bit}}{N_{DBPS}(tile0)} > \frac{B_{tot-bit}}{N_{DBPS}(tile1)} ? tile0 : tile1$ , that is, the cross-tile MPDU is allocated to a tile with a larger average quantity of bits carried in a valid carrier.
(3) Calculate a quantity of pre-FEC padded bits.

(a) Calculate a quantity $N_{sym,init,tl}$ of initial symbols and an a factor $a_{init,tl}$ of each tile, where because a tile 0 includes the service field, compared with another tile, the tile 0 has an $N_{service}$ part in a total quantity of valid bits:

$$N_{sym,init,tl} = \left\lceil \frac{8 \times PSDU\_LENGTH_{tl} + N_{service}}{N_{DBPS,tl}} \right\rceil, N_{service} = \begin{cases} 16, tile0 \\ 0, other \ tile \end{cases}$$

$$N_{Excess,tl} = \mod(8 \times PSDU\_LENGTH_{tl} + N_{service}, N_{DBPS,tl}),$$

**where** $N_{DBPS,tl} = N_{sd,tl} \cdot N_{BPSCS,tl} \cdot R_{tl}$

$$a_{init,tl} = \begin{cases} 4, & if \ N_{Excess,tl} = 0 \\ \min\left(\left\lceil \frac{N_{Excess,tl}}{N_{DBPS,short,tl}} \right\rceil, 4\right), & otherwise \end{cases}$$

$$N_{DBPS,short,tl} = N_{CBPS,short,tl} \cdot R_{tl} = N_{sd,short,tl} \cdot Nss \cdot N_{BPSCS,tl} \cdot R_{tl}$$

(4) For other processing and a subsequent process, refer to the method shown in FIG. 8. Details are not described herein again.

The following briefly describes the methods shown in FIG. 8 and FIG. 9. Specifically:

(1) As shown in FIG. 8, that the new PSDU subcarrier mapping manner is implemented through tile-based allocation includes tile-based allocation based on an EHT MRU bandwidth and a remaining non-MRU bandwidth. Correspondingly, a PSDU length of each tile is approximately allocated in proportion based on a quantity of valid subcarriers of each tile.

(2) As shown in FIG. 9, that the new PSDU subcarrier mapping manner is implemented through tile-based allocation includes a full bandwidth is evenly segmented, for example, a 160 MHz bandwidth is evenly segmented into four parts, where each part is a 484-tone RU. Correspondingly, a PSDU length of each tile is approximately allocated in proportion.

(3) In the tile-based allocation manners (1) and (2), for manners of processing an MPDU crossing two tiles, an average quantity of bits carried in a carrier of each of the two tiles is calculated, and the cross-tile MPDU is allocated to a tile with a larger average quantity of bits carried in a carrier. Alternatively, the MPDU may be allocated to a tile with smaller interference based on an interference proportion. When the MPDU is excessively long, MSDU segmenting is performed on the MPDU, and the MPDU is segmented into two or more smaller MPDUs. Then, the MPDUs are allocated according to the foregoing rule.

(4) In the tile-based allocation manners (1) and (2), a manner of processing the service field includes: preferentially allocating the service field to a tile in which a primary channel is located, to reduce a possibility of being interfered; or adding the service field to each tile, to improve a decoding probability of a scrambling seed.

(5) In the tile-based allocation manners (1) and (2), the tiles may use a same modulation mode, or may use different modulation modes.

(6) In the tile-based allocation manners (1) and (2), a shorter length of the MPDU of a tile with interference may be implemented through MSDU segmenting, to reduce an interference probability.

(7) The new PSDU subcarrier mapping manner includes performing tile-based allocation based on importance of an upper-layer data service. Basic information, key information, and information with a high real-time requirement are placed on a tile with smaller interference, and other information may be placed on a tile with higher interference frequency, to improve system reliability.

FIG. 11 is a diagram of a Wi-Fi frame format according to this application. The frame format is implemented by adding Coding Mode, ServiceField Mode, CodingTile MCS that are used for indication to the SIG domain. For example, Coding Mode=0 indicates a conventional puncturing mode, Coding Mode=1 indicates that tile-based allocation is performed based on a quantity of MRU parts and a quantity of non-MRU parts for subcarrier mapping, and Coding Mode=2 indicates that the bandwidth is evenly segmented into four parts. Servicefield Mode=0 indicates that mapping is performed from a low frequency to a high frequency in a conventional manner, Servicefield Mode=1 indicates that repeated mapping is performed on each tile, and Servicefield Mode=2 indicates that mapping is performed on the tile in which the primary channel is located. CodingTile MCS indicates an MCS, namely, a modulation order, used by each tile.

Optionally, the method may further include step 1530. S1530: The receiver device parses the PSDU.

For a specific parsing manner, refer to existing descriptions. This is not limited.

In the foregoing technical solutions, in an environment with random interference, spectral utilization and a total system throughput can be improved. In addition, tile-based allocation transmission is customized based on an upper-layer service requirement, and information with a high real-time requirement and key information are allocated to a subband in which a primary channel is located and with small interference. This improves system reliability and reduces a retransmission rate.

The foregoing describes in detail the method for sending and receiving a physical layer service data unit provided in this application. The following describes communication apparatuses provided in this application.

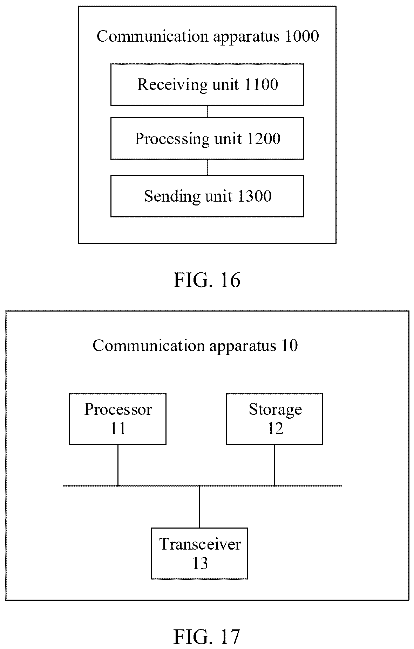

FIG. 16 is a block diagram of a communication apparatus 1000 according to this application. As shown in FIG. 16, the communication apparatus 1000 includes a receiving unit 1100, a processing unit 1200, and a sending unit 1300. Modules in the communication apparatus are configured to perform corresponding steps in the method in the method embodiments of this application.

A function of a processing apparatus may be implemented by hardware, or may be implemented by hardware executing corresponding software. For example, the processing apparatus may include a storage and a processor. The storage is configured to store a computer program, and the processor reads and executes the computer program stored in the storage, so that the communication apparatus 1000 performs the operations and/or the processing performed by the sending device in the method embodiments. Optionally, the processing apparatus may include only the processor, and the storage configured to store the computer program is located outside the processing apparatus. The processor is connected to the storage through a circuit/wire, to read and execute the computer program stored in the storage. For another example, the processing apparatus may be a chip or an integrated circuit.

Optionally, in an implementation in which the communication apparatus 1000 may be a chip or an integrated circuit installed in the sending device, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

FIG. 17 is a diagram of a structure of a communication apparatus 10 according to this application. The apparatus 10 includes a processor 11. The processor 11 is coupled to a storage 12, the storage 12 is configured to store a computer program or instructions and/or data, and the processor 11 is configured to: execute the computer program or the instructions stored in the storage 12, or read the data stored in the storage 12, to perform the method in the foregoing method embodiments.

Optionally, there are one or more processors 11.

Optionally, there are one or more storages 12.

Optionally, the storage 12 is integrated with the processor 11, or separately disposed.

Optionally, as shown in FIG. 17, the apparatus 10 may further include a transceiver 13. The transceiver 13 is configured to receive and/or send signals. For example, the processor 11 is configured to control the transceiver 13 to receive and/or send the signal.

In addition, this application further provides a computer-readable storage medium. The computer-readable storage medium stores computer instructions. When the computer instructions are run on a computer, the method in the method embodiments of this application is performed.

This application further provides a computer program product. The computer program product includes computer program code or instructions. When the computer program code or the instructions are run on a computer, the method in the method embodiments of this application is performed.

In addition, this application further provides a chip, and the chip includes a processor. A storage configured to store a computer program is disposed independent of the chip. The processor is configured to execute the computer program stored in the storage, so that the method in the method embodiments of this application is performed.

Further, the chip may include a communication interface. The communication interface may be an input/output interface, an interface circuit, or the like. Further, the chip may include the storage.

It should be understood that the processor in embodiments of this application may be an integrated circuit chip, and has a signal processing capability. In an implementation process, the steps in the method embodiments can be completed by using a hardware integrated logic circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps in the method disclosed in embodiments of this application may be directly performed and completed by a hardware encoding processor, or performed and completed by a combination of hardware and a software module in an encoding processor. A software module may be located in a mature storage medium in the art, for example a random access memory, a flash memory, a read-only memory, a programmable read-only memory, an electrically erasable programmable memory, or a register. The storage medium is located in the storage, and the processor reads information in the storage and completes the steps in the foregoing method in combination with hardware of the processor.

A storage in embodiments of this application may be a volatile storage or a non-volatile storage, or may include both a volatile storage and a non-volatile storage. The non-volatile storage may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), and is used as an external cache. By way of example rather than limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware assembly, a storage (storage module) may be integrated into the processor.

It should be further noted that the storage described herein is intended to include, but is not limited to, these and any other appropriate type of storage.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into units is merely division into logical functions and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

Units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the method described in embodiments of this application. The foregoing storage medium includes any medium that can store program code, for example, a USB flash drive, a removable hard disk, a ROM, a RAM, a magnetic disk, or an optical disc.

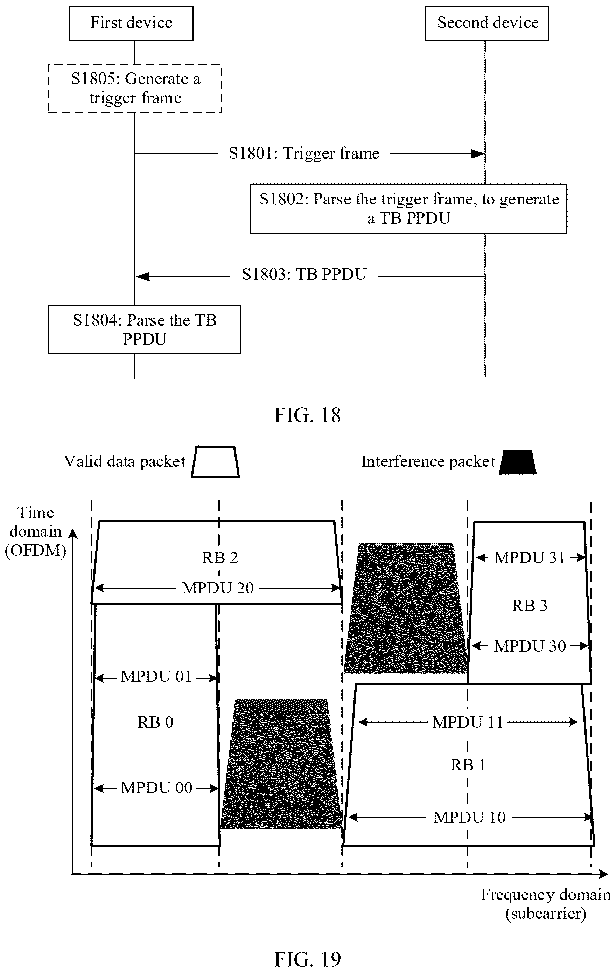

FIG. 18 is a block diagram of a data transmission method according to an embodiment of this application. As shown in FIG. 18, a data transmission method provided in embodiments of this application includes the following steps. The method may be applied to the scenario in FIG. 3, or another communication scenario in which an OBSS exists. This is not limited in embodiments of this application. For example, in FIG. 5, a first device may be an AP, and a second device may be a STA. The method includes the following steps.

S1801: The first device sends a trigger frame to the second device. Correspondingly, the second device receives the trigger frame from the transmitter.

The trigger frame indicates the first device to send a trigger-based (Trigger-based, TB) PPDU.

The trigger frame further indicates a resource allocated to the TB PPDU. Specifically, the trigger frame includes at least one of the following information: a length of the trigger-based PPDU, a location of an allocated RU/MRU, a coding scheme, a quantity of pre-FEC padded bits, Coding Mode, ServiceField Mode, CodingTile MCS, CodingTile Nss, and the like. The length of the trigger-based PPDU is used to notify a quantity of sent symbols, for example, an air interface length, of the trigger-based PPDU. The location of the allocated RU/MRU is used to notify a location of a transmit spectrum of the trigger-based PPDU. The coding scheme and the quantity of pre-FEC padded bits are used to notify a coding scheme of a data part of the trigger-based PPDU and the quantity of pre-FEC padded bits. Coding Mode is used to notify a PSDU subcarrier mapping mode. For example, Coding Mode=0 indicates that PSDU subcarrier mapping is performed based on the MRU, Coding Mode=1 indicates that tile-based allocation is performed based on a quantity of RUs in the MRU for PSDU subcarrier mapping, and Coding Mode=2 indicates that the RU/MRU is allocated to tiles at a granularity of a 20 MHz bandwidth for PSDU subcarrier mapping. Servicefield Mode indicates a mapping manner of a service field, for example, Servicefield Mode=0 indicates that mapping is performed from a low frequency to a high frequency (or both the service field and a PSDU are mapped to the tile), Servicefield Mode=1 indicates that the service field is repeatedly mapped to tiles (the service field is not mapped the tiles together with the PSDU, but is repeatedly added to a header of each tile). CodingTile MCS indicates a modulation coding scheme MCS or a modulation order used by each tile. CodingTile Nss indicates an Nss, namely, a quantity of spatial streams, used by each tile.

S1802: The second device parses the trigger frame, to generate the TB PPDU.

Specifically, after receiving the trigger frame, the second device parses the trigger frame, to obtain information about the resource allocated to the TB PPDU, and then generates the TB PPDU based on the information about the resource allocated to the TB PPDU.

The TB PPDU may be obtained through tile-based allocation provided in this application. For specific descriptions in which the second device generates the TB PPDU, refer to the descriptions in S510. Each tile in S510 is independently encoded.

S1803: The second device sends the TB PPDU to the first device. Correspondingly, the first device receives the TB PPDU from the second device.

For S1803, refer to the descriptions in the S520. Details are not described herein again.

S1804: The first device parses the TB PPDU.

Optionally, before S1801, the method further includes:

S1805: The first device generates the trigger frame.

Optionally, in a method of pre-allocating L MPDUs in FIG. 6, in a pre-allocation process, based on a quality of service (quality of service, QoS) level of the upper-layer data service, a PSDU with a high level is repeatedly mapped to each tile, to improve decoding accuracy of service data.

As described in FIG. 7, a difference between a conventional transmitter and this application lies in that scrambling processing in this application is implemented through tile-based allocation. For example, each tile in FIG. 7 uses an independent scrambling sequence (or referred to as a scrambler), and the sequences may be generated based on a same scrambling seed or different scrambling seeds that is/are processed based on a same scrambling polynomial or different scrambling polynomials. The tiles may use a same scrambling sequence to reduce resource overheads. In addition, using a same scrambling seed can improve a decoding probability of a scrambling seed of the receiver. For example, a scrambling seed parsed on a tile with best quality is selected, or scrambling seeds parsed by the tiles are weighted. The tiles may alternatively use different scrambling sequences. For example, scramblers of different lengths are used based on sizes of data amounts transmitted by the tiles. This can meet randomness of data, and improve confidentiality of the data.

FIG. 19 is a diagram of a possible PSDU subcarrier mapping method according to an embodiment of this application. The method includes allocating a PSDU to N tiles. Each tile is a group of contiguous or non-contiguous subcarriers and OFDM symbols or time-frequency units. The tiles are independent of each other. Data amounts of different user equipments may be allocated to different time-frequency units (separately or as a whole), to reduce total resource overheads. Alternatively, in a scenario with a high interference frequency, a tile may be allocated to a time-frequency unit with small interference, to improve scheduling flexibility. For example, in FIG. 19, communication resources are segmented based on time-frequency units. Resource blocks obtained through segmenting may be separately used to transmit the tiles. For example, an RB 0 is used to transmit an MPDU 00 and an MPDU 01, and an RB 1 is used to transmit an MPDU 10 and an MPDU 11.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

**Claims**

1. A data transmission method, performed in a system in which a channel is segmented into N sub-channels, wherein the method comprises:

    generating a physical layer protocol data unit PPDU, wherein the PPDU comprises a physical layer service data unit PSDU, the PSDU comprises N tiles, the N tiles one-to-one correspond to the N sub-channels, each sub-channel is used to carry a corresponding tile, and each tile comprises at least one medium access control protocol data unit MPDU in the PPDU, wherein $N \geq 2$ and N is an integer; and
    sending the PPDU through the N sub-channels.

2. The method according to claim 1, wherein the MPDU comprised in each tile is obtained by allocating, based on a proportion of a quantity of valid data bits carried in one symbol corresponding to each of the N sub-channels, L MPDUs comprised in an aggregate medium access control protocol data unit A-MPDU in the PPDU, wherein $L \geq N$ and L is an integer.

3. The method according to claim 2, wherein

when a part of a first MPDU in the L MPDUs is allocated to a first tile in the N tiles based on the proportion, and a remaining part of the first MPDU is allocated to a second tile in the N tiles, the first MPDU belongs to the first tile, a first quantity of symbols required for a non-cross-tile MPDU that is allocated to the first tile is less than a second quantity of symbols required for a non-cross-tile MPDU that is allocated to the second tile, the first quantity of symbols is a ratio of a quantity of bits carried in the non-cross-tile MPDU that is allocated to the first tile to a quantity of valid data bits carried in a symbol corresponding to the first sub-channel, and the second quantity of symbols is a ratio of a quantity of bits carried in the non-cross-tile MPDU that is allocated to the second tile to a quantity of valid data bits carried in a symbol corresponding to the second sub-channel; or

when all of a first MPDU in the L MPDUs is allocated to a first tile in the N tiles based on the proportion, the first MPDU belongs to the first tile.

4. The method according to any one of claims 1 to 3, wherein the method further comprises:

generating a second MPDU; and

when a length of the second MPDU is greater than or equal to a first threshold, segmenting the second MPDU into a plurality of MPDUs that meet a requirement of the first threshold, wherein the plurality of MPDUs are comprised in the L MPDUs, and the first threshold is an MPDU segmenting threshold.

5. The method according to any one of claims 1 to 4, wherein N is a sum of a quantity of multiple resource unit MRU-type bandwidths and a quantity of non-MRU-type bandwidths of the channel, or N is a quantity of equally segmented bandwidths of the channel.

6. The method according to any one of claims 1 to 5, wherein the PPDU further comprises one or more repeated service fields.

7. The method according to claim 6, wherein each tile comprises the service field.

8. The method according to claim 6, wherein a third tile in the N tiles comprises the service field, and the third tile is one of the N tiles.

9. The method according to claim 8, wherein a primary channel of the channel is comprised in a sub-channel that carries the third tile.

10. The method according to claim 8 or 9, wherein when N is the quantity of equally segmented bandwidths of the channel, the third tile is a tile that comprises the service field and that is generated by equally segmenting the service field and the L MPDUs as a whole into N parts.

11. The method according to any one of claims 1 to 10, wherein N=4.

12. The method according to any one of claims 1 to 11, wherein the PPDU comprises a signaling SIG field, the SIG field comprises a first subfield and a second subfield, the first subfield indicates a tile-based allocation manner of the PSDU, and the second subfield indicates a mapping manner of the service field in the N tiles.

13. The method according to claim 12, wherein the SIG field further comprises a third subfield, and the third subfield indicates a modulation order used by the N tiles.

14. The method according to claim 12 or 13, wherein the SIG field further comprises a fourth subfield, and the fourth subfield indicates a quantity of spatial streams used by the N tiles.

15. A data transmission method, performed in a system in which a channel is segmented into N sub-channels, wherein the method comprises:

receiving a physical layer protocol data unit PPDU through the N sub-channels, wherein the PPDU comprises a physical layer service data unit PSDU, the PSDU comprises N tiles, the N tiles one-to-one correspond to the N sub-channels, each sub-channel is used to carry a corresponding tile, and each tile comprises at least one medium access control protocol data unit MPDU in the PPDU, wherein N≥2 and N is an integer; and parsing the PPDU.

16. The method according to claim 15, wherein the MPDU comprised in each tile is obtained by allocating, based on a proportion of a quantity of valid data bits carried in one symbol corresponding to each of the N sub-channels, L MPDUs comprised in an aggregate medium access control protocol data unit A-MPDU in the PPDU, wherein $L \geq N$ and L is an integer.

17. The method according to claim 15 or 16, wherein N is a sum of a quantity of multiple resource unit MRU-type bandwidths and a quantity of non-MRU-type bandwidths of the channel, or N is a quantity of equally segmented bandwidths of the channel.

18. The method according to any one of claims 14 to 17, wherein the PPDU further comprises one or more repeated service fields.

19. The method according to claim 18, wherein each tile comprises the service field.

20. The method according to claim 18, wherein a third tile in the N tiles comprises the service field, and the third tile is one of the N tiles.

21. The method according to claim 20, wherein a primary channel of the channel is comprised in a sub-channel that carries the third tile.

22. The method according to claim 20 or 21, wherein when N is the quantity of equally segmented bandwidths of the channel, the third tile is a tile that comprises the service domain and that is generated by equally segmenting the service field and the L MPDUs as a whole into N parts.

23. The method according to any one of claims 14 to 22, wherein N=4.

24. The method according to any one of claims 14 to 23, wherein the PPDU comprises a signaling SIG field, the SIG field comprises a first subfield and a second subfield, the first subfield indicates a tile-based allocation manner of the PSDU, and the second subfield indicates a mapping manner of the service field in the N tiles.

25. The method according to claim 24, wherein the SIG field further comprises a third subfield, and the third subfield indicates a modulation order used by the N tiles.

26. The method according to claim 24 or 25, wherein the SIG field further comprises a fourth subfield, and the fourth subfield indicates a quantity of spatial streams used by the N tiles.

27. A communication apparatus, comprising a module configured to perform the method according to any one of claims 1 to 26.

28. A communication apparatus, comprising at least one processor, wherein the at least one processor is coupled to at least one storage, and the at least one processor is configured to execute a computer program or instructions stored in the at least one storage, to enable the communication apparatus to perform the method according to any one of claims 1 to 26.

29. A computer-readable storage medium, wherein the computer-readable storage medium stores computer instructions; and when the computer instructions are run on a computer, the method according to any one of claims 1 to 26 is performed.

Valid data packet
996-tone RU

Interference packet
242-tone RU

FIG. 1

FIG. 2

(a)

(b)

FIG. 3

Primary 20          Secondary 20        Secondary 40
MHz channel         MHz channel         MHz channel

Busy

Not punctured          Punctured

FIG. 4

| Transmitter device | Receiver device |

510: Generate a PPDU, where the PPDU includes a PSDU, the PSDU includes N tiles, the N tiles one-to-one correspond to N sub-channels, each sub-channel is used to carry a corresponding tile, each tile includes at least one MPDU, and each tile is independently encoded

520: Send the PPDU through the N sub-channels

530: Parse the PPDU

FIG. 5

| MPDU #1 | MPDU #2 | ... | MPDU #K−1 | MPDU #K | MPDU #K+1 | ... | MPDU #L |

Tile 0                                                      Tile 1

FIG. 6

FIG. 7

FIG. 8

Conventional PSDU mapping manner

PSDU #M

A-MPDU #M (pre-allocation)

| Service field 16 bits | MPDU #1 | MPDU #2 | ... | MPDU #K | MPDU #K+1 | ... | MPDU #L | Pre-FEC padding |

◄─────────────── Tile 0 ───────────────►◄─── Tile 1 ───►

Allocation result

| A | B |

MPDU K

PSDU #0

Tile 0 | Service field 16 bits | MPDU #1 | MPDU #2 | ... | MPDU #K | Pre-FEC padding |

A-MPDU #0

PSDU #1

Tile 1 | Service field 16 bits | MPDU #K+1 | ... | MPDU #L | Pre-FEC padding |

A-MPDU #1

FIG. 8

FIG. 9

FIG. 10

| Coding Mode | Servicefield Mode | CodingTile MCS | CodingTile Nss | ... |
|---|---|---|---|---|

| L-STF | L-LTF | L-SIG | RL-SIG | U-SIG | XT-SIG | XT-STF | XT-LTF | Data | PE |
|---|---|---|---|---|---|---|---|---|---|

FIG. 11

Communication apparatus 200

Communication unit 210

Processing unit 220

FIG. 12

Communication apparatus 300

Processor
310

Storage
330

Transceiver
320

FIG. 13

Apparatus 400

Processing
circuit 410

Storage
medium 430

Transceiver
circuit 420

FIG. 14

Sending device

Receiving device

1510: Generates a physical layer
service data unit PSDU

1520: Send the PSDU in a
first frequency band, where
the first frequency band
includes a frequency band
with interference and a
frequency band without
interference

1530: Parse the
PSDU

FIG. 15

Communication apparatus 1000

Receiving unit 1100

Processing unit 1200

Sending unit 1300

FIG. 16

Communication apparatus 10

Processor
11

Storage
12

Transceiver
13

FIG. 17

First device

Second device

S1805: Generate a
trigger frame

— S1801: Trigger frame —→

S1802: Parse the trigger frame, to generate
a TB PPDU

←— S1803: TB PPDU —

S1804: Parse the TB
PPDU

FIG. 18

Valid data packet    Interference packet

Time
domain
(OFDM)

RB 2
←———— MPDU 20 ————→

←— MPDU 31 →
RB 3
←— MPDU 30 →

←— MPDU 01 →
RB 0

←——— MPDU 11 ———→
RB 1

←— MPDU 00 →

←——— MPDU 10 ———→

Frequency domain
(subcarrier)

FIG. 19

## INTERNATIONAL SEARCH REPORT

| International application No. |
|---|
| **PCT/CN2023/102814** |

**A.    CLASSIFICATION OF SUBJECT MATTER**

H04L5/00(2006.01)i

According to International Patent Classification (IPC) or to both national classification and IPC

**B.    FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, CNABS, CNKI, DWPI, VEN, USTXT, EPTXT, JPTXT, WOTXT, IEEE, 百度, BAIDU: 信道, 子片, 频谱, 频道, 频带, 干扰, 独立, 划分, 分割, 拆分, 浪费, 利用率, 效率, channel, subchannel, PPDU, PSDU, MPDU, MSDU, MRU, RU, divided, part, chip, utilization rate, spectrum

**C.    DOCUMENTS CONSIDERED TO BE RELEVANT**

| Category* | Citation of document, with indication, where appropriate, of the relevant passages | Relevant to claim No. |
|---|---|---|
| X | CN 113597000 A (HUAWEI TECHNOLOGIES CO., LTD.) 02 November 2021 (2021-11-02) description, paragraphs [0091]-[0226], and figures 1-14 | 1, 5-15, 18-29 |
| X | CN 113824532 A (HUAWEI TECHNOLOGIES CO., LTD.) 21 December 2021 (2021-12-21) description, paragraphs [0119]-[0364], and figures 4-20 | 1, 5-15, 18-29 |
| A | CN 114337964 A (MEDIATEK SINGAPORE PTE. LTD.) 12 April 2022 (2022-04-12) entire document | 1-29 |
| A | CN 113473622 A (HONOR TERMINAL CO., LTD.) 01 October 2021 (2021-10-01) entire document | 1-29 |
| A | US 2016057657 A1 (NEWRACOM INC.) 25 February 2016 (2016-02-25) entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **18 September 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102814**

| Patent document cited in search report | | | Publication date (day/month/year) | Patent family member(s) | | | Publication date (day/month/year) |
|---|---|---|---|---|---|---|---|
| CN | 113597000 | A | 02 November 2021 | WO | 2021218692 | A1 | 04 November 2021 |
| | | | | EP | 4135386 | A1 | 15 February 2023 |
| CN | 113824532 | A | 21 December 2021 | WO | 2021254207 | A1 | 23 December 2021 |
| | | | | EP | 4156568 | A1 | 29 March 2023 |
| CN | 114337964 | A | 12 April 2022 | US | 2022116885 | A1 | 14 April 2022 |
| | | | | US | 11553438 | B2 | 10 January 2023 |
| | | | | US | 2023073278 | A1 | 09 March 2023 |
| | | | | EP | 3982679 | A1 | 13 April 2022 |
| | | | | TW | 202215880 | A | 16 April 2022 |
| | | | | TWI | 763596 | B | 01 May 2022 |
| CN | 113473622 | A | 01 October 2021 | CN | 113473622 | B | 17 May 2022 |
| | | | | WO | 2022267690 | A1 | 29 December 2022 |
| US | 2016057657 | A1 | 25 February 2016 | KR | 20160022790 | A | 02 March 2016 |
| | | | | US | 2022029771 | A1 | 27 January 2022 |

Form PCT/ISA/210 (patent family annex) (July 2022)

**REFERENCES CITED IN THE DESCRIPTION**

**Patent documents cited in the description**

- CN 202210734430
- CN 202210932646

- CN 202310742777